# EUROPEAN PATENT APPLICATION

(11) **EP 4 804 609 A1**
(43) Date of publication of application: **09.09.2026**
(21) Application number: 24885421.8
(22) Date of filing: 15.10.2024
(51) Int. Cl.: H04W 28/06, H04W 24/10

(54) **TERMINAL DEVICE, TERMINAL DEVICE METHOD, AND BASE STATION DEVICE**

(30) Priority: 02.11.2023 JP 2023188709
(71) Applicant: DENSO CORPORATION, Kariya-city, Aichi 448-8661 (JP)
(72) Inventor: NAGANO, Tatsuki, Kariya- city, Aichi 4488661 (JP)
(74) Representative: TBK
(86) International application number: PCT/JP2024/036590
(87) International publication number: WO 2025/094646

(57) **Abstract**

A terminal apparatus (10) is configured to transmit a first buffer status reporting (BSR) medium access control control element (MAC CE) based on a first table and a second BSR MAC CE based on any one of the first table and a second table, the terminal apparatus being further configured to transmit the second BSR MAC CE in a case where information for allowing use of the second table is configured, an amount of available data is within a buffer size defined in the second table, and a number of padding bits is equal to or larger than a predetermined size.

## Description

### Cross-Reference To Related Application

The present application is based on and claims the benefit of priority to Japanese Patent Application No. 2023-188709 filed on November 2, 2023, the contents of which are incorporated herein by reference in its entirety.

### Technical Field

The present disclosure relates to a terminal apparatus, a method of a terminal apparatus, and a base station apparatus.

### Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

### Citation List

### Non Patent Literature

[NPL 1] 3GPP TR 38.838 V17.0.0 (2021-12)
[NPL 2] 3GPP TS 38.321 V17.2.0 (2022-09)
[NPL 3] 3GPP TS 38.331 V17.2.0 (2022-09)

### SUMMARY

Incidentally, NPL 2 describes a procedure of buffer status reporting (BSR). Furthermore, NPL 3 describes a parameter for the BSR, which is a parameter transmitted from a base station apparatus. The BSR indicates a buffer size of uplink data for predetermined data. The predetermined data is data corresponding to one logical channel group (LCG). A terminal apparatus calculates the buffer size for each LCG, and transmits the BSR including the calculated buffer size to the base station apparatus. The base station apparatus allocates radio resources to the terminal apparatus, based on the BSR.

The BSR includes three types, namely a regular BSR, a padding BSR, and a periodic BSR. The regular BSR, the padding BSR, and the periodic BSR are triggered based on different conditions. The BSR has a plurality of formats. In a case where the BSR is triggered, the terminal apparatus selects a format according to a satisfied condition. The inventor has found an issue that, in a case where the padding BSR is triggered in XR, for example, the terminal apparatus may not be able to transmit the BSR of a specific format depending on the number of padding bits. Note that the issue also occurs in a general terminal apparatus and a general base station apparatus other than those with XR implementation.

The present disclosure provides a technology by which a terminal apparatus can appropriately select a format of a BSR.

A terminal apparatus according to the present disclosure includes a transmitter configured to transmit, to a base station apparatus, a first buffer status reporting (BSR) medium access control control element (MAC CE) having a first format including a buffer size field indicating an amount of available data based on a first table related to a buffer size, and a receiver configured to receive, from the base station apparatus, a radio resource control (RRC) message including information for configuring an identifier (ID) of a logical channel group (LCG) to which a logical channel (LCH) belongs and information for allowing use of a second table related to the buffer size for the LCG. The transmitter is configured to, in a case where the information for allowing use of the second table is configured, the amount of the available data is within a buffer size defined in the second table, and a number of padding bits is equal to or larger than a predetermined size, transmit, to the base station apparatus, a second BSR MAC CE having a second format including the buffer size field indicating the amount of the available data based on any one of the first table and the second table.

A method for a terminal apparatus according to the present disclosure includes transmitting, to a base station apparatus, a first buffer status reporting (BSR) medium access control control element (MAC CE) having a first format including a buffer size field indicating an amount of available data based on a first table related to a buffer size; and receiving, from the base station apparatus, a radio resource control (RRC) message including information for configuring an identifier (ID) of a logical channel group (LCG) to which a logical channel (LCH) belongs and information for allowing use of a second table related to the buffer size for the LCG. The method further includes, in a case where the information for allowing use of the second table is configured, the amount of the available data is within a buffer size defined in the second table, and a number of padding bits is equal to or larger than a predetermined size, transmitting, to the base station apparatus, a second BSR MAC CE having a second format including the buffer size field indicating the amount of the available data based on any one of the first table and the second table.

A base station apparatus according to the present disclosure includes a receiver configured to receive, from a terminal apparatus, a first buffer status reporting (BSR) medium access control control element (MAC CE) having a first format including a buffer size field indicating an amount of available data based on a first table related to a buffer size, and a transmitter configured to transmit, to the terminal apparatus, a radio resource control (RRC) message including information for configuring an identifier (ID) of a logical channel group (LCG) to which a logical channel (LCH) belongs and information for allowing use of a second table related to the buffer size for the LCG. The receiver is configured to, in a case where the information for allowing use of the second table is configured, the amount of the available data is within a buffer size defined in the second table, and a number of padding bits is equal to or larger than a predetermined size, receive, from the terminal apparatus, a second BSR MAC CE having a second format including the buffer size field indicating the amount of the available data based on any one of the first table and the second table.

According to the configuration described above, the terminal apparatus can appropriately select any one of the first BSR and the second BSR as the format of the BSR. Note that the configurations above may exert, instead of or together with the above advantageous effects, other advantageous effects.

### BRIEF DESCRIPTION OF THE DRAWINGS

The above and other objects, features, and advantages of the present disclosure will become more apparent in the following detailed description with reference to the accompanying drawings. The drawings are as follows:
Fig. 1 is a diagram illustrating a communication system S;
Fig. 2 is a diagram illustrating a U-plane protocol stack;
Fig. 3 is a diagram illustrating a C-plane protocol stack;
Fig. 4 is a block diagram illustrating a schematic hardware configuration of a terminal apparatus 10;
Fig. 5 is a block diagram illustrating a schematic functional configuration of the terminal apparatus 10;
Fig. 6 is a block diagram illustrating a schematic hardware configuration of a base station apparatus 20;
Fig. 7 is a block diagram illustrating a schematic functional configuration of the base station apparatus 20;
Fig. 8 is a diagram illustrating a radio frame configuration;
Fig. 9 is a diagram illustrating a configuration of a short BSR;
Fig. 10 is a diagram illustrating a configuration of a long BSR;
Fig. 11 is a diagram illustrating an example of a BSR table (i.e., a first table);
Fig. 12 is a diagram for illustrating processing of generating a BSR according to priorities of logical channels;
Fig. 13 is a sequence diagram illustrating a flow of processing of the terminal apparatus 10 and the base station apparatus 20;
Fig. 14 is a diagram illustrating an example of an additional BSR table (i.e., a second table);
Fig. 15 is a diagram illustrating a configuration of an additional BSR (i.e., a second BSR);
Fig. 16 is a diagram illustrating an example of a configuration of a delay information report;
Fig. 17 is a diagram illustrating another example of a configuration of a delay information report; and
Fig. 18 is a sequence diagram illustrating a flow of processing of the terminal apparatus 10 and the base station apparatus 20.

### DETAILED DESCRIPTION

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or changed according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed as long as the configurations are not inconsistent with each other.

### 1. First Embodiment

### 1.1. Communication System

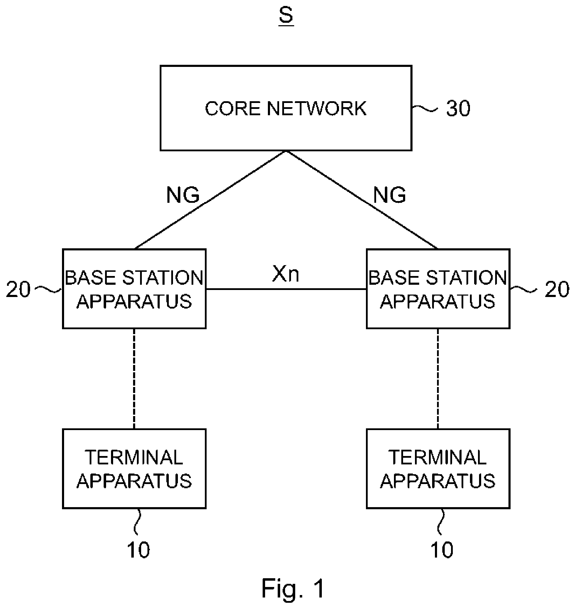

As illustrated in Fig. 1, a communication system S includes one or more terminal apparatuses 10, one or more base station apparatuses 20, and a core network 30. The communication system S is configured in accordance with certain technical specifications. For example, the communication system S may be compliant with technical specifications defined by 3GPP (for example, 5G, 5G advanced, 6G, or the like).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The terminal apparatus 10 may be a device that performs radio communication with the base station apparatus 20, and may be, for example, a user equipment (UE) that operates in accordance with 5G NR technical specifications of 3GPP. The terminal apparatus 10 may be an apparatus that is compliant with other older or newer 3GPP technical specifications.

The terminal apparatus 10 may be, for example, a mobile phone terminal such as a smartphone, a tablet terminal, a notebook PC, a communication module, a communication card, or an IoT device such as a surveillance camera and a robot. The terminal apparatus 10 may be a vehicle (for example, a car, a train, or the like), or an apparatus mounted on the vehicle. The terminal apparatus 10 may be a transport machine body other than the vehicle (for example, a ship, an airplane, or the like), or an apparatus mounted on the transport machine body. The terminal apparatus 10 may be a sensor, or an apparatus provided with the sensor. Note that the terminal apparatus 10 may be referred to as another name such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 is preferably an apparatus adapted to one or more of enhanced mobile broadband (eMBB), ultra-reliable and low-latency communications (URLLC), and massive machine type communications (mMTC).

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) technical specifications of 3GPP and connects to a 5G core network (5GC) of 3GPP, for example. The base station apparatus 20 may be an apparatus conforming to other older or newer technical specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

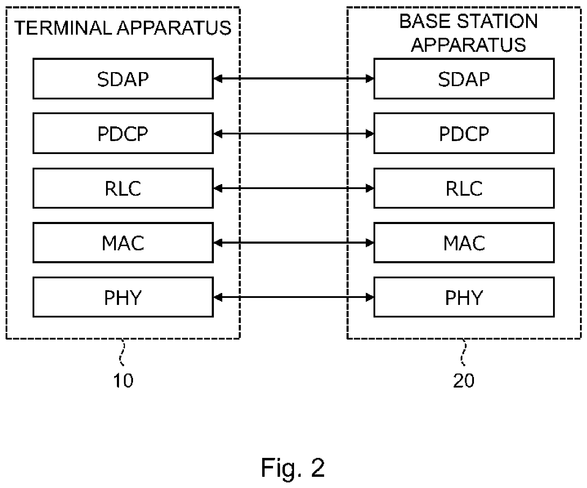

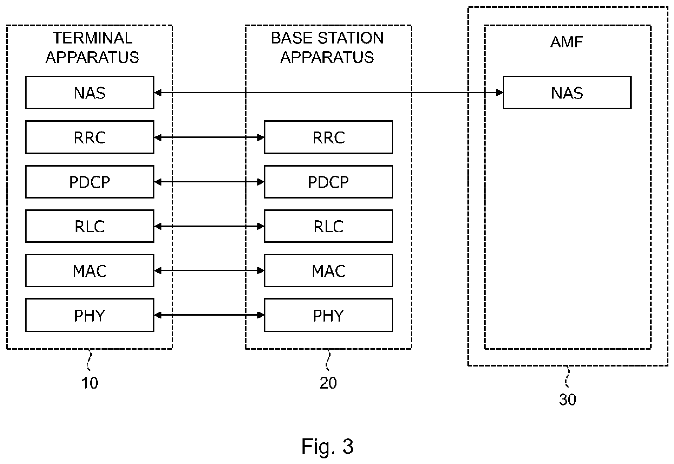

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side. The MAC layer is also referred to as "Medium Access Control layer."

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side. The MAC layer is also referred to as "Medium

### Access Control layer."

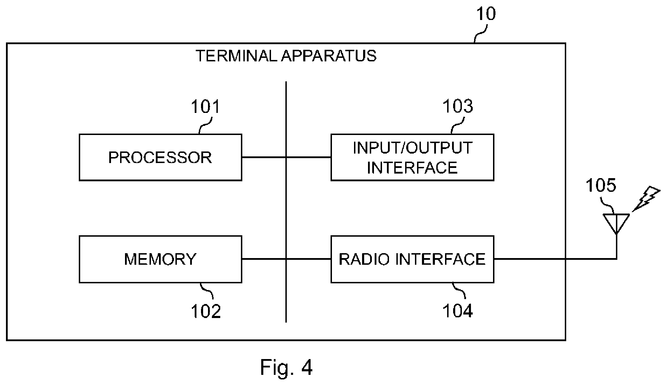

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user. The input/output interface 103 is a touch panel, for example.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

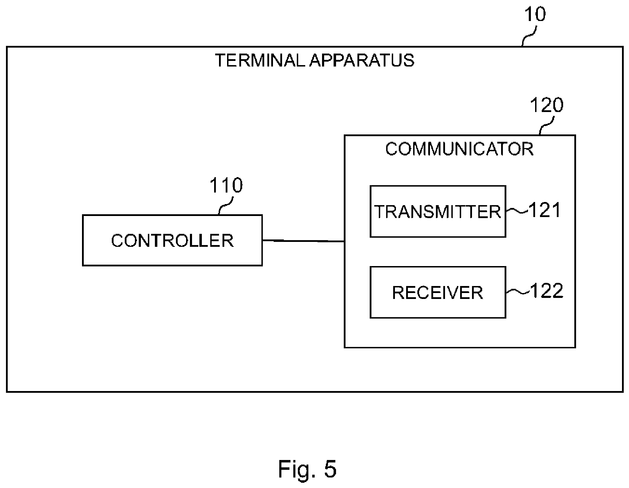

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120. In other words, the controller 110 performs, via the communicator 120, transmission/reception of data/information/message.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. The communicator 120 may include two or more radio interfaces 104 and two or more antennas 105.

When the controller 110 operates, the various types of processing of the terminal apparatus 10 are executed.

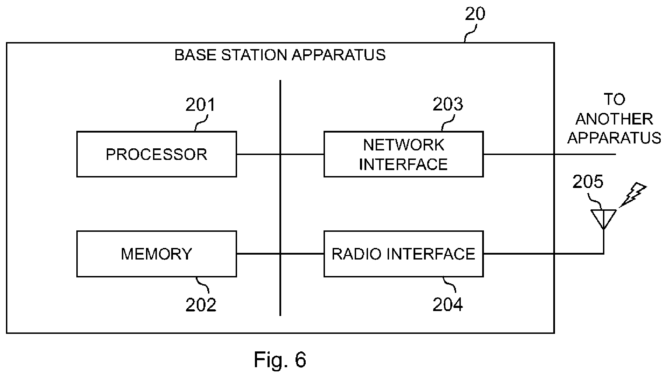

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the terminal apparatus 10 via the antenna 205.

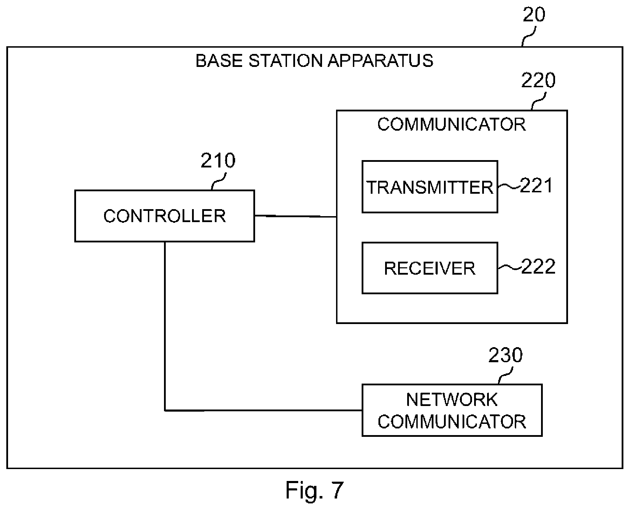

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. In other words, the controller 210 performs, via the communicator 220, transmission/reception of data/information/message. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. The communicator 220 may include two or more radio interfaces 204 and two or more antennas 205.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 are executed.

### 1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period (GP) for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) Δf in the frequency domain. In the communication system S, a plurality of subcarrier spacings Δf may be applied. The subcarrier spacing Δf is expressed by the following expression, for example. $Δf = {2}^{μ} ⋅ 15 \left[kHz\right]$

Here, µ is an integer of 0 or greater, and may be any one of values of 0, 1, 2, 3, 4, 5, and 6. Accordingly, the subcarrier spacing Δf [kHz] may be any one of values of 15, 30, 60, 120, 240, 480, and 960. Note that µ may be a value of 7 or greater.

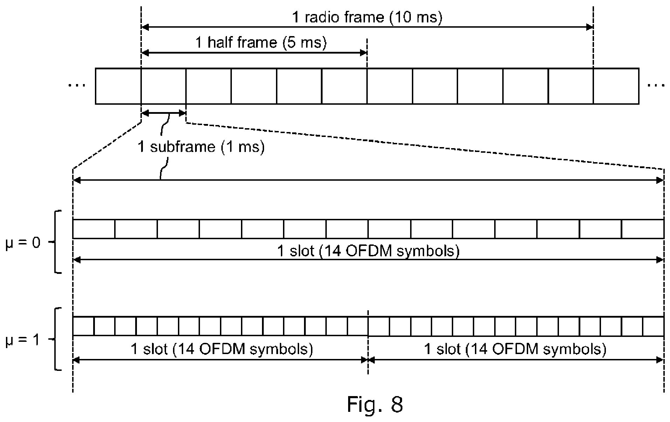

In the time domain of OFDM, as illustrated in Fig. 8, a hierarchical radio frame configuration is used. One radio frame includes 10 subframes. The subframes are numbered with subframe numbers counting up from 0 to 9 by one. One radio frame is divided into two half frames. A time length of the radio frame is 10 ms, a time length of the half frame is 5 ms, and a time length of the subframe is 1 ms. The above time lengths are not dependent upon the subcarrier spacing Δf.

One subframe includes one or more slots. The number Ns of slots included in one subframe is dependent upon the value of µ described above, ultimately the subcarrier spacing Δf. The number Ns of slots is expressed by the following expression, for example. $Ns = {2}^{μ}$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. The SFN "0" corresponds to an initial SFN value, and the SFN "1023" corresponds to the largest SFN value. Hence, SFN 0 is assigned to a radio frame that follows a radio frame assigned SFN 1023. The time length of the radio frame is 10 ms, and accordingly the time length of one cycle of the system frame number is 10240 ms (= 10.24 seconds).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

### 1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in a PHY layer. A plurality of transport channels may be mapped to one physical channel. Examples of the transport channel include a downlink common channel (DownLink Shared Channel, DL-SCH) and an uplink common channel (UpLink Shared Channel, UL-SCH). For example, data in downlink is also referred to as data of the DL-SCH. For example, data in uplink is also referred to as data of the UL-SCH. Here, the data of the DL-SCH includes user data in downlink. The data of the UL-SCH includes user data in uplink.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. Hereinafter, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

The terminal apparatus 10 may monitor (and/or receive) the PDCCH and detect (and/or receive) the DCI format.

The terminal apparatus 10 transmits, to the base station apparatus 20, uplink control information (UCI) by using a PUCCH being a physical channel. The UCI includes control information such as a scheduling request (SR), an Ack/Nack in hybrid automatic repeat request (HARQ), and channel state information (CSI). The UCI is mapped to the PUCCH or the PUSCH, and corresponds to Layer 1 signaling.

The base station apparatus 20 transmits, to the terminal apparatus 10, a control element (CE) of a MAC layer by using a DL-SCH being a transport channel. The downlink MAC CE is mapped to a PDSCH via the DL-SCH, and corresponds to Layer 2 signaling.

The terminal apparatus 10 transmits, to the base station apparatus 20, a control element (CE) of a MAC layer by using a UL-SCH being a transport channel. The uplink MAC CE includes control information such as buffer status reporting (BSR). The uplink MAC CE is mapped to a PUSCH via the UL-SCH, and corresponds to Layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation, UAI) message will be described. The UAI message is an RRC message transmitted from the terminal apparatus 10 to the base station apparatus 20 using SRB1 or SRB3. The DCCH is used to transmit the UAI message. The UAI message is used to notify the base station apparatus 20 of various pieces of information (e.g., UE assistance information) related to the terminal apparatus 10.

### 1.4. Uplink Scheduling

### 1.4.1. Scheduling Request (SR)

An SR is used for the terminal apparatus 10 to request PUSCH radio resource allocation from the base station apparatus 20. An SR may be used for request of a UL-SCH resource for initial transmission. The base station apparatus 20 allocates, to the terminal apparatus 10, a PUCCH resource for transmission of the SR. The base station apparatus 20 transmits, to the terminal apparatus 10, an RRC message including a parameter for the SR. The parameter for the SR is included in an information element (IE) "SchedulingRequestResourceConfig" being an example of an IE for RRC.

The terminal apparatus 10 transmits, to the base station apparatus 20, UCI including the SR by using the configured PUCCH resource. The terminal apparatus 10 may transmit the UCI on demand. The terminal apparatus 10 may transmit the UCI with a configured periodicity. For example, the terminal apparatus 10 may transmit the SR set to "0" (negative SR) and/or the SR set to "1" (positive SR). In accordance with the SR, the base station apparatus 20 allocates a PUSCH radio resource to the terminal apparatus 10.

### 1.4.2. Dynamic Grant (DG)

A DG is a scheduling method of allocating a PUSCH radio resource in accordance with an uplink grant procedure. The base station apparatus 20 transmits, to the terminal apparatus 10, an uplink grant on a PDCCH. The terminal apparatus 10 performs transmission of a PUSCH in accordance with the uplink grant. For example, the base station apparatus 20 may allocate a PUSCH radio resource by using a C-RNTI and/or a DCI format with a CRC scrambled with an MCS-C-RNTI (i.e., DCI format used for scheduling of the PUSCH), and the terminal apparatus 10 may perform uplink transmission by using the PUSCH radio resource allocated. Here, a new data indicator to be included in the C-RNTI and/or the DCI format with the CRC scrambled with the MCS-C-RNTI may be set to 0 or 1. The base station apparatus 20 may allocate a PUSCH radio resource by using a DCI format with a CRC scrambled with a CS-RNTI (i.e., DCI format used for scheduling of the PUSCH), and the terminal apparatus 10 may perform uplink transmission by using the PUSCH radio resource allocated. A new data indicator to be included in the DCI format with the CRC scrambled with the CS-RNTI may be set to 1.

### 1.4.3. Configured Grant (CG)

A CG is a scheduling method of allocating a PUSCH radio resource without the dynamic uplink grant procedure. The CG includes two types, type 1 and type 2. The base station apparatus 20 transmits, to the terminal apparatus 10, an RRC message including a parameter for the CG. The parameter for the CG is included in an information element (IE) "ConfiguredGrantConfig" being an example of an IE for RRC. The IE "ConfiguredGrantConfig" includes a parameter "periodicity" related to a periodicity of transmission using a PUSCH. Note that the parameter "periodicity" is configured in units of the number of slots or number of symbols. Alternatively, the parameter "periodicity" may be configured in units of Frame Per Second (FPS). For type 1, the terminal apparatus 10 initiates transmission of a signal with a configured periodicity, without any trigger by DCI. In contrast, for type 2, the base station apparatus 20 transmits, to the terminal apparatus 10, DCI scrambled with a CS-RNTI. The CS-RNTI is used for activation of periodic transmission. In accordance with such activation by the DCI scrambled with the CS-RNTI, the terminal apparatus 10 initiates transmission using a PUSCH with a configured periodicity.

### 1.5. Buffer Status Report (Buffer Status Reporting (BSR))

The terminal apparatus 10 transmits, using an allocated PUSCH radio resource, a BSR by using MAC signaling. The BSR is configured with a MAC CE included in a medium access control protocol data unit (MAC PDU). The BSR is used for indicating information related to a buffer status of uplink data in a MAC entity. Based on the BSR, the base station apparatus 20 performs radio resource allocation for uplink with respect to the terminal apparatus 10.

In the BSR, a logical channel (LCH) is allocated to a logical channel group (LCG). Each LCG includes one or more LCHs. The terminal apparatus 10 calculates, for each LCG, a buffer size of uplink data. The terminal apparatus 10 transmits, to the base station apparatus 20, the buffer size corresponding to each LCG as the BSR.

The base station apparatus 20 transmits, to the terminal apparatus 10, an RRC message including a parameter for the BSR. The parameter for the BSR is included in an information element (IE) "BSR-Config" being an example of an IE for RRC. For example, the IE "BSR-Config" includes three timers, "periodicBSR-Timer", "retxBSR-Timer", and "logicalChannelSR-DelayTimer".

A parameter associated with an LCG is included in an information element (IE) "LogicalChannelConfig" being an example of an IE for RRC. In other words, the base station apparatus 20 may transmit an RRC message including the IE "LogicalChannelConfig". Based on the IE "LogicalChannelConfig" included in the RRC message, the terminal apparatus 10 may identify a configuration related to an LCH and/or LCG. For example, the IE "LogicalChannelConfig" includes an IE "logicalChannelGroup". With the IE "logicalChannelGroup", an LCH is allocated to an LCG. For example, for each of one or a plurality of LCHs, an LCG index (ID) may be configured, and an LCG that such one or a plurality of LCHs belong to may be configured. Note that the IE "LogicalChannelConfig" may include an IE "logicalChannelGroupIAB-Ext". The IE "logicalChannelGroupIAB-Ext" is applied only to an Integrated Access Backhaul-Mobile Termination (IAB-MT). In a case where the IE "logicalChannelGroupIAB-Ext" is configured, the IE "LogicalChannelConfig" is ignored.

The terminal apparatus 10 may trigger the BSR in accordance with a certain condition. For example, for an activated cell group, the terminal apparatus 10 may trigger the BSR when any of the following conditions (a1) to (a4) is satisfied. Note that the following conditions may be referred to as "events".
(a1) For an LCH belonging to a certain LCG, uplink data becomes available to a MAC entity, and either one of the following two is satisfied:
   - the uplink data belongs to an LCH with higher priority than the priorities of any LCHs including available uplink data that belong to any LCG; or
   - none of the LCHs that belong to an LCG includes any available uplink data.
(a2) Uplink resources are allocated and the number of padding bits is equal to or larger than a size of a BSR MAC CE plus its subheader.
(a3) "retxBSR-Timer" expires and at least one of the LCHs belonging to an LCG includes uplink data.
(a4) "periodicBSR-Timer" expires.

The BSR includes Regular BSR, Padding BSR, and Periodic BSR, at least. Regular BSR, Padding BSR, and Periodic BSR may each be triggered based on a different condition. For example, the terminal apparatus 10 triggers Regular BSR in a case where either of the condition (a1) or (a3) is satisfied. The terminal apparatus 10 triggers Padding BSR in a case where the condition (a2) is satisfied. The terminal apparatus 10 triggers Periodic BSR in a case where the condition (a4) is satisfied.

The BSR includes a plurality of formats. The plurality of formats include Short BSR and Long BSR, at least. A MAC PDU including the BSR includes a MAC subheader. The MAC subheader includes a logical channel identifier (LCID) or an extended logical channel identifier (eLCID). The value of LCID or eLCID may be referred to as a codepoint. A format of the BSR are each identified by a codepoint value.

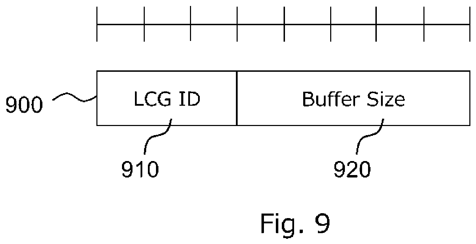

Short BSR is a format for reporting of a buffer status (i.e., buffer size) of one LCG. As illustrated in Fig. 9, the Short BSR includes one field 900 having a fixed size of 8 bits. The field 900 includes a first part 910 and a second part 920.

The first part 910 includes 3 bits. The first part 910 is information for identifying the LCG for which the buffer status is reported. The first part 910 may be referred to as an "LCG ID field".

The second part 920 includes 5 bits. The second part 920 is information for identifying a total amount of data available for all the LCHs included in the LCG indicated by the first part 910. The second part 920 may be simply referred to as a "buffer size". The second part 920 indicates an index indicating the number of bytes. The terminal apparatus 10 configures the second part 920 to an index corresponding to the buffer size with reference to a predetermined BSR table. The BSR table includes values (which are also referred to as "codepoints", for example) of 32 indices. For example, the second part 920 indicates any one of the values of 0 to 31. The value of each index corresponds to a range of the buffer size. In other words, the BSR table defines a correspondence between the indices and the range of the buffer size. As the value of the index is smaller, the buffer size corresponding to the value of the index is smaller. As the value of the index is larger, the buffer size corresponding to the value of the index is larger.

Note that the short BSR may include a Truncated format being a format for the LCH having a high priority (i.e., LCH priority) and an Extended format being a format with which a larger amount of information can be transmitted.

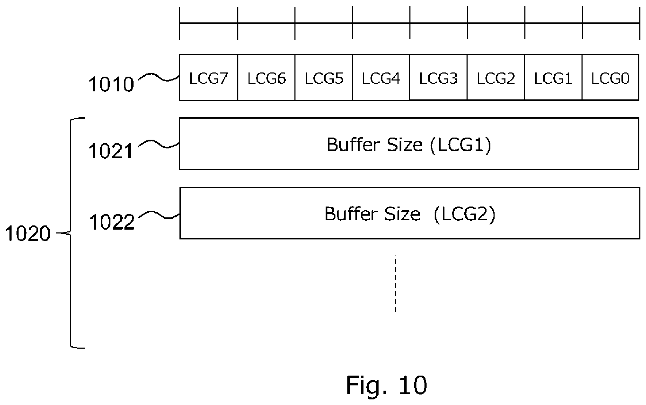

The long BSR is a format for reporting the buffer statuses (i.e., buffer sizes) of a plurality of LCGs. As illustrated in Fig. 10, the long BSR has a variable size. The long BSR includes an LCG field 1010 and a buffer size field 1020.

The LCG field 1010 includes 8 bits. In the LCG field 1010, the 8 bits respectively correspond to 8 "LCGi"s. Here, i is an integer of 0 to 7. The definition of i is the same in the following description. The LCG field 1010 may indicate whether the buffer size field for LCGi is present. For example, in the LCG field 1010, in a case where the value of LCGi is 1, this indicates that the buffer size field corresponding to LCGi is present. In a case where the value of LCGi is 0, this indicates that the buffer size field corresponding to LCGi is not present.

The number of fields included in the buffer size field 1020 is variable according to the value of the LCG field 1010. In the LCG field 1010, it is assumed that the bit corresponding to LCG1 is 1 and the bit corresponding to LCG2 is 1. Thus, the buffer size field 1020 includes a field 1021 corresponding to LCG1 and a field 1022 corresponding to LCG2. Note that, in Fig. 10, a field corresponding to LCG0 is not included in the buffer size field 1020, because it is assumed that the bit corresponding to LCG0 is 0.

Each field included in the buffer size field 1020 includes 8 bits. Each field indicates the buffer size to be reported (for example, the size of data available for transmission). Each field indicates the index indicating the number of bytes.

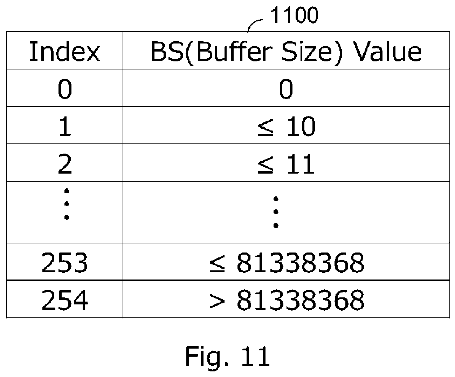

The terminal apparatus 10 configures the buffer size field 1020 to an index corresponding to the buffer size with reference to a BSR table 1100 illustrated in Fig. 11.

The BSR table 1100 includes values (which are also referred to as "codepoints", for example) of 255 indices. The indices are values of 0 to 254. The value of each index corresponds to a range of the buffer size. In other words, the BSR table 1100 defines a correspondence between the indices and the range of the buffer size. As the value of the index is smaller, the buffer size corresponding to the value of the index is smaller. As the value of the index is larger, the buffer size corresponding to the value of the index is larger. The range of each buffer size corresponding to the values of 255 indices is defined according to a predetermined exponential function. Thus, as the value of the index is larger, the range of the buffer size corresponding to the value of the index is larger.

In the following, the BSR table used for the second part 920 of the short BSR and the BSR table 1100 used for the buffer size field 1020 of the long BSR may be collectively referred to as a "first table". Note that the buffer size field configured with reference to the first table may be referred to as a "first buffer size field".

Note that the long BSR may include a Truncated format and an Extended format, similarly to the short BSR.

The BSR may include a Pre-emptive BSR format and an Extended Pre-emptive BSR format. These formats are used in the IAB-MT.

The terminal apparatus 10 may select any one of the short BSR and the long BSR according to a predetermined method. For example, for the regular BSR and the periodic BSR, the MAC entity for which the logicalChannelGroup-IABExt IE is not configured by upper layers may select any one of the short BSR and the long BSR as follows.
(b1) If more than one LCG has data available for transmission when the MAC PDU containing the BSR is to be built:
   the terminal apparatus 10 transmits (or reports) Long BSR for all LCGs which have available data,
(b1) else:
   the terminal apparatus 10 transmits (or reports) Short BSR.

For the regular BSR and the periodic BSR, the MAC entity for which the logicalChannelGroup-IABExt IE is configured by upper layers may select any one of the long BSR, the Extended long BSR, and the Extended short BSR as follows.
(c1) If more than one LCG has data available for transmission when the MAC PDU containing the BSR is to be built:
   (c2) if the maximum LCG ID among the configured LCGs is 7 or lower:
      the terminal apparatus 10 transmits (or reports) Long BSR for all LCGs which have available data,
   (c2) else:
      the terminal apparatus 10 transmits (or reports) Extended Long BSR for all LCGs which have available data,
(c1) else,
   the terminal apparatus 10 transmits (or reports) Extended Short BSR.

For the padding BSR, the terminal apparatus 10 may transmit any one of the following BSR formats according to a satisfied condition.
- Short BSR
- Long BSR
- Short Truncated BSR
- Long Truncated BSR
- Extended short BSR
- Extended long BSR
- Extended short Truncated BSR
- Extended long Truncated BSR

For example, for the padding BSR, the MAC entity for which the logicalChannelGroup-IABExt IE is not configured by upper layers may select the BSR format as follows.
(d1) If the number of padding bits is equal to or larger than the size of the Short BSR plus its subheader but smaller than the size of the Long BSR plus its subheader:
   (d2) if more than one LCG has data available for transmission when the BSR is to be built:
      (d3) if the number of padding bits is equal to the size of the Short BSR plus its subheader:
         the terminal apparatus 10 transmits (or reports) Short Truncated BSR of the LCG with the highest priority LCH among the LCHs with data available for transmission,
      (d3) else:
         the terminal apparatus 10 transmits (or reports) Long Truncated BSR of the LCG(s) with the LCHs having data available for transmission following a decreasing order of the highest priority LCH with or without data available for transmission in each of these LCG(s). Note that, in a case where the priorities are equal, the terminal apparatus 10 transmits (or reports) the long Truncated BSR in increasing order of the LCG IDs,
   (d2) else:
      the terminal apparatus 10 transmits (or reports) Short BSR,
(d1) else if the number of padding bits is equal to or larger than the size of the Long BSR plus its subheader:
   the terminal apparatus 10 transmits (or reports) Long BSR for all LCGs which have data available for transmission.

For example, for the padding BSR, the MAC entity for which the logicalChannelGroup-IABExt IE is configured by upper layers may select the BSR format as follows.
(e1) If the number of padding bits is equal to or larger than the size of the Extended Short BSR plus its subheader but smaller than the size of the Extended Long BSR plus its subheader:
   (e2) if more than one LCG has data available for transmission when the BSR is to be built:
      (e3) if the number of padding bits is smaller than the size of the Extended Long Truncated BSR with zero Buffer Size field plus its subheader:
         the terminal apparatus 10 transmits (or reports) Extended Short Truncated BSR of the LCG with the highest priority LCH among the LCHs having data available for transmission,
      (e3) else:
         the terminal apparatus 10 transmits (or reports) Extended Long Truncated BSR of the LCG(s) with the LCHs having data available for transmission following a decreasing order of the highest priority LCH with or without data available for transmission) in each of these LCG(s). Note that, in case of equal priority, the terminal apparatus 10 transmits (or reports) the Extended long Truncated BSR in increasing order of the LCG IDs,
   (e2) else:
      the terminal apparatus 10 transmits (or reports) the Extended short BSR,
(e1) else if the number of padding bits is equal to or larger than the size of the Extended Long BSR plus its subheader:
   the terminal apparatus 10 transmits (or reports) the Extended Long BSR for all LCGs which have data available for transmission.

As described above, the terminal apparatus 10 may select the BSR format, based on the number of padding bits and the priority of the LCH. The priority of the LCH may be included in a LogicalChannelConfig IE being an example of an RRC information element. For example, the priority of the LCH is priority included in the LogicalChannelConfig IE. priority is represented by a positive integer. As the value of priority included in the LogicalChannelConfig IE is larger, the priority of the LCH is higher. The base station apparatus 20 transmits an RRC message including the priority of the LCH. The terminal apparatus 10 identifies the priority of the LCH, based on the RRC message.

Next, a transmission example of each of the short Truncated BSR and the long Truncated BSR will be described.

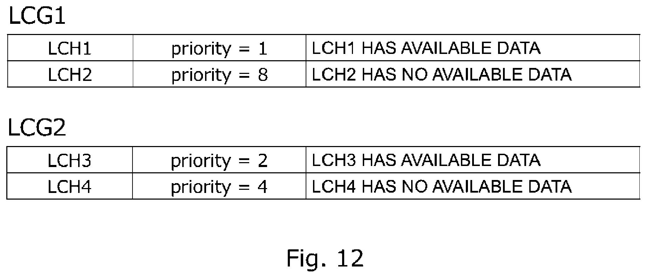

As illustrated in the example of Fig. 12, it is assumed that two LCGs are configured. Specifically, LCG1 and LCG2 are configured. LCG1 includes two LCHs, namely LCH1 and LCH2. The priority of LCH1 is 1. LCH1 has available data. The priority of LCH2 is 8. LCH2 does not have available data. LCG2 includes two LCHs, namely LCH3 and LCH4. The priority of LCH3 is 2. LCH3 has available data. The priority of LCH4 is 4. LCH4 does not have available data. Note that priority in Fig. 12 is priority included in the LogicalChannelConfig IE. Thus, as the value of the integer is larger, the priority of the LCH is higher.

It is assumed that the condition of (d1) is satisfied, the condition of (d2) is satisfied, and the condition of (d3) is satisfied. In this case, the terminal apparatus 10 transmits the short Truncated BSR as follows. The highest priority LCH among the LCHs having available data is LCH3. Thus, the terminal apparatus 10 transmits the short Truncated BSR related to LCG2 including LCH3. Note that the configuration of the short Truncated BSR is the same as the configuration of the short BSR illustrated in Fig. 9.

It is assumed that the condition of (d1) is satisfied, the condition of (d2) is satisfied, and the condition of (d3) is not satisfied. In this case, the terminal apparatus 10 transmits the long Truncated BSR as follows. The highest priority LCH with or without data available for transmission is LCH2. The priority of LCG1 including LCH2 is higher than LCG2. The terminal apparatus 10 reports the buffer size in order of LCG1 and LCG2.

For example, the buffer size field 1020 may include a plurality of fields in order of priority. The buffer size field 1020 may include a field related to the buffer size of LCG1 and a field related to the buffer size of LCG2 in the order.

For the long Truncated BSR, the number of fields included in the buffer size field 1020 may be variable according to the number of padding bits. For example, in a case where three LCGs are configured but the number of padding bits is small, the buffer size field 1020 may include only two fields. In this case, the terminal apparatus 10 may include two fields in the buffer size field 1020 in order of priority.

Note that the configuration of the long Truncated BSR is basically the same as the configuration of the long BSR illustrated in Fig. 10 but is different in the following. The LCG field 1010 indicates whether LCGi has available data. For example, in the LCG field 1010, in a case where the value of LCGi is 1, this indicates that LCGi has available data. In a case where the value of LCGi is 0, this indicates that LCGi does not have available data.

The following will describe a procedure in which the terminal apparatus 10 transmits the BSR to the base station apparatus 20.

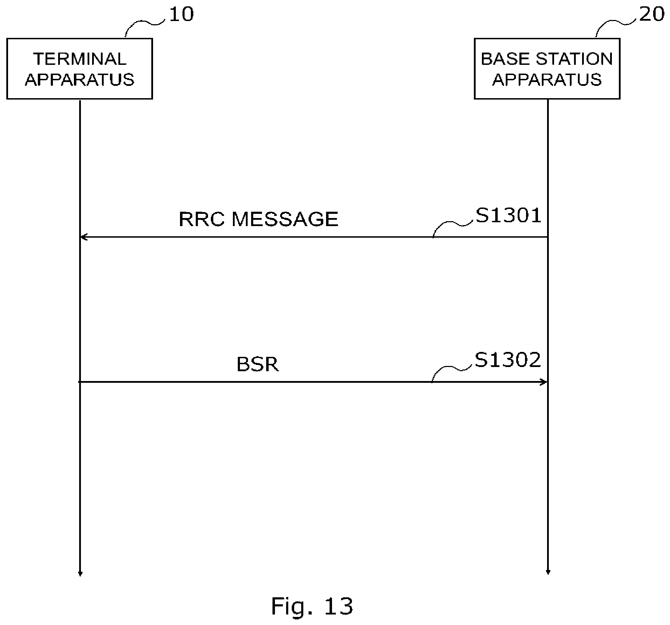

As illustrated in Fig. 13, the communicator 220 of the base station apparatus 20 transmits an RRC message to the terminal apparatus 10 (S1301). The RRC message includes a parameter related to the BSR and a parameter related to the LCG. The RRC message may be an RRC reconfiguration (RRCReconfiguration) message. The controller 110 of the terminal apparatus 10 generates the BSR, based on the parameters included in the RRC message. The communicator 120 of the terminal apparatus 10 transmits the BSR (S1302).

Specifically, after receiving the RRC message, the terminal apparatus 10 determines whether any of the above conditions (a1) to (a4) is satisfied. As described above, the terminal apparatus 10 may trigger any one of the regular BSR, the padding BSR, and the periodic BSR according to the satisfied condition.

In a case where the triggered BSR is the regular BSR or the periodic BSR, the terminal apparatus 10 may select the BSR format according to the above condition (b1). In a case where the triggered BSR is the regular BSR or the periodic BSR, the terminal apparatus 10 may select the BSR format according to the above conditions (c1) to (c2).

In a case where the triggered BSR is the padding BSR, the terminal apparatus 10 may select the BSR format according to the above conditions (d1) to (d3). In a case where the triggered BSR is the padding BSR, the terminal apparatus 10 may select the BSR format according to the above conditions (e1) to (e3).

### 1.6. Extended Reality (eXtended Reality, XR)

Characteristics of traffic generated in XR will be described. In XR, a plurality of types of data (video data, voice data, user data, control data, and the like) are transmitted and received in parallel. A plurality of data streams corresponding to the data segments have different traffic characteristics and QoS requirements.

At timings of transmission and reception of the data, time shifts expressed as jitter, variability, and fluctuation may occur due to factors such as encoding of a video and audio and network latency.

Reference Literature 1 describes that the following definitions can be introduced for transmission and reception in XR.

### [Reference Literature 1] 3GPP TR 23.700-60 V1.1.0 (2022-09)

PDU set: a set of PDUs including one or more PDUs carrying a payload of one unit of information generated at an application level. The application level corresponds, for example, to a frame or a video slice in an XR service.

Data burst: a set of datamultiple PDUs generated and sent by an application in a short period of time. The PDUs within a PDU set may correspond to PDCP service data units (SDUs).

Furthermore, for XR, requirements of a packet delay budget (PDB) as the QoS requirements have been studied. The PDB is an upper bound of packet delay time allowed between the terminal apparatus 10 and the UPF. Note that Reference Literature 1 also describes that the following new QoS parameters can be introduced.

PDU-set delay budget (PSDB): an upper bound of PDU-set delay time allowed between the terminal apparatus 10 and the UPF.

PDU-set error rate (PSER): an upper bound of an error rate calculated between a PDU set processed by a sender, and all the PDUs in a PDU set that has not successfully delivered to an upper layer of a corresponding receiver.

### 1.7. Enhancement of Buffer Status Reporting (BSR)

In the BSR, indices corresponding to the ranges of the buffer sizes predefined in the BSR table (for example, the BSR table 1100) are indicated, and thus a quantization error is generated. As described above, as the value of the index defined in the BSR table is larger, the range of the buffer size corresponding to the value of the index is larger. Thus, for large-capacity traffic such as XR, in a case where the terminal apparatus 10 reports the buffer size by using the BSR, the quantization error may also become larger. The base station apparatus 20 may not be able to appropriately allocate radio resources to the terminal apparatus 10, based on the BSR.

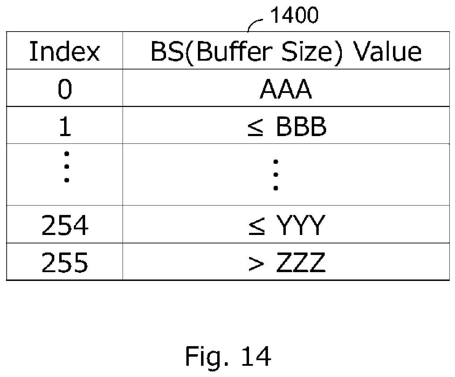

To address this, a new BSR table 1400 illustrated in Fig. 14 may be defined. In the following, the BSR table 1400 is referred to as a "second table". Note that the second table may be referred to as an "enhanced BSR table", an "additional BSR table", or an "XR BSR table". The buffer size field configured with reference to the second table may be referred to as a "second buffer size field".

The second table is a table for an 8-bit buffer status field, similarly to the BSR table 1100. Thus, the second table may include values of 256 indices. The indices may be values of 0 to 255. The value of each index may correspond to a range of the buffer size. In other words, the second table may define a correspondence between the indices and the range of the buffer size. Note that, in BS Value of Fig. 14, a character string is inserted for the sake of description; however, a numerical value is configured in actuality. For example, as the value of the index is smaller, the buffer size corresponding to the value of the index may be smaller. As the value of the index is larger, the buffer size corresponding to the value of the index may be larger. The range of each buffer size corresponding to the values of 256 indices may be defined according to a predetermined exponential function.

Furthermore, the range and/or granularity of the second table is different from that defined in the first table (for example, the BSR table 1100). Here, the range of the second table may mean a range between the minimum value and the maximum value of the buffer size in the second table. The granularity of the second table may mean a degree of fineness or coarseness of a division width in a case where the range of the second table is divided by the number (for example, 256) of indices. Note that, in a case where the range of each buffer size corresponding to the value of the index is defined according to a predetermined exponential function, as the value of the index is larger, the division width (i.e., the range of the buffer size) corresponding to the value of the index may be larger. The range and/or the granularity of the second table may be defined to correspond to the traffic of XR, for example. For example, the range of the second table may be narrower than the range of the first table (i.e., the range between the minimum value and the maximum value of the buffer size in the first table). For example, the range of the second table may be narrower than the range of the BSR table 1100. In other words, the range narrower than the first table (for example, the BSR table 1100) may be divided into 256, and the value of the index may be assigned to each divided range. Thus, the granularity of the second table may have granularity higher (finer) than the first table (for example, the BSR table 1100).

The base station apparatus 20 may transmit an RRC message including configuration information for the second table to the terminal apparatus 10. In the following, the configuration information is referred to as "first configuration information". The first configuration information may be included in a MAC-CellGroupConfig IE being an example of an RRC information element (IE). The first configuration information may be additionalBSR-TableAllowed included in the MAC-CellGroupConfig IE.

The first configuration information may be "information indicating whether or not use of the second table by the terminal apparatus 10 is allowed". The first configuration information may be a flag indicating that "use of the second table is allowed" or "use of the second table is not allowed".

For example, the first configuration information may be information indicating whether or not use of the second table is allowed for each LCG. The first configuration information may be a bit string (i.e., a bitmap) including a plurality of bits. For example, the leftmost bit may be a bit corresponding to LCG ID "0". The second bit from the left end may be a bit corresponding to LCG ID "1". In a case where the value of the bit is 1, this may indicate that use of the second table, in addition to the first table, is allowed in reporting the buffer size of the LCG corresponding to the bit. In a case where the value of the bit is 0, this may indicate that use of the second table is not allowed in reporting the buffer size of the LCG corresponding to the bit. In other words, in a case where the value of the bit is 0, this may indicate use of only the first table in reporting the buffer size of the LCG corresponding to the bit.

Note that the base station apparatus 20 may transmit system information (SI, for example, SIB1 and/or SIB other than SIB1) including the first configuration information to the terminal apparatus 10. The base station apparatus 20 may transmit DCI including the first configuration information to the terminal apparatus 10.

In order to use the second table, an additional BSR MAC CE may be defined. Such a MAC CE may be referred to as an "enhanced BSR MAC CE", a "refined BSR MAC CE", or an "XR BSR MAC CE".

In the following, the BSRs in which the buffer size is configured using only the first table are collectively referred to as a "first BSR" or a "first BSR format". In other words, existing BSRs described below are referred to as a "first BSR" or a "first BSR format".
- Short BSR
- Long BSR
- Short Truncated BSR
- Long Truncated BSR
- Extended short BSR
- Extended long BSR
- Extended short Truncated BSR
- Extended long Truncated BSR

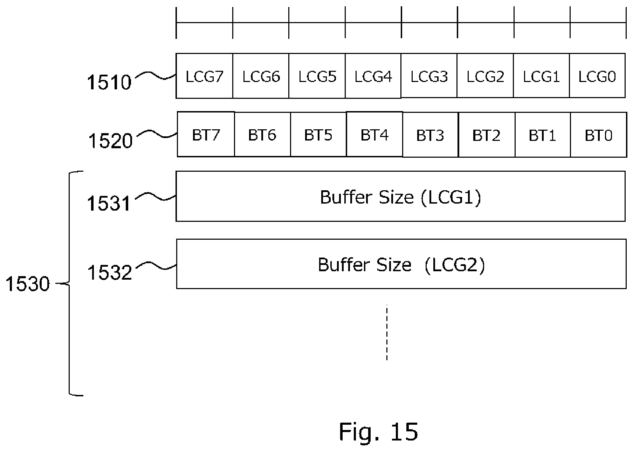

The BSR of Fig. 15 corresponds to the additional BSR MAC CE, and is referred to as a "second BSR" or a "second BSR format" to be distinguished from the first BSR.

As illustrated in Fig. 15, the long BSR as the second BSR includes an LCG field 1510, a buffer size table (BT) field 1520, and a buffer size field 1530.

The LCG field 1510 includes 8 bits. The LCG field 1510 has the same configuration as that of the LCG field 1010 of Fig. 10. The LCG field 1510 may indicate whether the buffer size field for LCGi is present.

The BT field 1520 includes 8 bits. The 8 bits respectively correspond to 8 "LCGi"s. For example, the BT field 1520 indicates which of the first table (for example, the BSR table 1100) and the second table is used to indicate the buffer size of LCGi. In a case where the value of BTi is 0, this may indicate that the first table is used to indicate the buffer size of LCGi. In a case where the value of BTi is 1, this may indicate that the second table is used to indicate the buffer size of LCGi.

The number of fields included in the buffer size field 1530 is variable according to the value of the LCG field 1510. In the LCG field 1510, it is assumed that the bit corresponding to LCG1 is 1 and the bit corresponding to LCG2 is 1. Thus, the buffer size field 1530 includes a field 1531 corresponding to LCG1 and a field 1532 corresponding to LCG2. Note that, in Fig. 15, a field corresponding to LCG0 is not included in the buffer size field 1530, because it is assumed that the bit corresponding to LCG0 is 0.

Furthermore, in the BT field 1520, it is assumed that the bit of BT1 corresponding to LCG1 is 0 and the bit of BT2 corresponding to LCG2 is 1. Thus, the field 1531 corresponding to LCG1 is configured with reference to the first table (for example, the BSR table 1100). In other words, the field 1531 corresponding to LCG1 corresponds to the first buffer size field. The field 1532 corresponding to LCG2 is configured with reference to the second table. In other words, the field 1532 corresponding to LCG2 corresponds to the second buffer size field.

Note that the configuration of Fig. 15 may be applied to the long Truncated BSR as the second BSR. In the configuration, the LCG field 1510 may indicate whether LCGi has available data. For example, in the LCG field 1510, in a case where the value of LCGi is 1, this may indicate that LCGi has available data. In a case where the value of LCGi is 0, this may indicate that LCGi does not have available data.

The MAC PDU may include identification information for identifying whether the BSR is the second BSR. For example, the MAC subheader includes a value (i.e., a codepoint) of LCID or eLCID. The value of LCID or eLCID indicating that the BSR is the second BSR may be defined. For example, the following values of LCID or eLCID may be defined.
- The MAC CE includes the second BSR, and the second BSR is the long BSR.
- The MAC CE includes the second BSR, and the second BSR is the long Truncated

### BSR.

The terminal apparatus 10 may select any one of the first BSR and the second BSR according to the procedure of Fig. 13, and transmit the selected BSR to the base station apparatus 20. For example, the RRC message of Step S1301 may include the first configuration information. The controller 110 triggers any one of the regular BSR, the padding BSR, and the periodic BSR according to the above conditions (a1) to (a4). The following will describe aspect 1 and aspect 2 as operations of the terminal apparatus 10 in a case where the BSR is triggered.

### 1.7.1 Aspect 1

The controller 110 may select any one of the first BSR and the second BSR, based on at least one of the parameters (for example, the first configuration information) included in the RRC message and the buffer size to be reported (i.e., the size of data available for transmission). For example, the controller 110 may operate according to the following aspects 1-1 to 1-3.

### (Aspect 1-1)

In a case where the first configuration information indicates that use of the second table is allowed for at least one LCG, the controller 110 may select the second BSR. In this case, the controller 110 may select the second BSR, regardless of the number of LCGs having data available for transmission. For example, in a case where the number of LCGs having data available for transmission is one, the controller 110 may select the second BSR instead of the first BSR including the short BSR.

On the other hand, in a case where the first configuration information indicates that there is no LCG for which use of the second table is allowed, the controller 110 may select the first BSR.

In another example, in a case where the first configuration information indicates that there is no LCG for which use of the second table is allowed, and the triggered BSR is the regular BSR or the periodic BSR, the controller 110 may select the BSR format as follows. The controller 110 may select the BSR format according to the above condition (b1). The controller 110 may select the BSR format according to the above conditions (c1) to (c2).

In another example, in a case where the first configuration information indicates that there is no LCG for which use of the second table is allowed, and the triggered BSR is the padding BSR, the controller 110 may select the BSR format as follows. The controller 110 may select the BSR format according to the above conditions (d1) to (d3). The controller 110 may select the BSR format according to the above conditions (e1) to (e3).

### (Aspect 1-2)

In a case where the first configuration information indicates that use of the second table is allowed for at least one LCG having data available for transmission when the MAC PDU containing the BSR is built, the controller 110 may select the second BSR.

On the other hand, in a case where only the LCGs for which use of the second table is not allowed have data available for transmission, the controller 110 may select the first BSR.

In another example, in a case where the triggered BSR is the regular BSR or the periodic BSR, and only the LCGs for which use of the second table is not allowed have data available for transmission, the controller 110 may select the BSR format as follows. The controller 110 may select the BSR format according to the above condition (b1). The controller 110 may select the BSR format according to the above conditions (c1) to (c2).

In another example, in a case where the triggered BSR is the padding BSR, and only the LCGs for which use of the second table is not allowed have data available for transmission, the controller 110 may select the BSR format as follows. The controller 110 may select the BSR format according to the above conditions (d1) to (d3). The controller 110 may select the BSR format according to the above conditions (e1) to (e3).

### (Aspect 1-3)

In a case where the first configuration information indicates that use of the second table is allowed for at least one LCG having data available for transmission, and the total amount of data available for transmission (i.e., the buffer size to be reported) that all the LCHs belonging to the at least one LCG have is within the range of the second table, when the MAC PDU containing the BSR is built, the controller 110 may select the second BSR.

"The total amount of data available for transmission is within the range of the second table" may mean that the total amount of data is equal to or larger than the minimum value of the buffer size defined in the second table and equal to or smaller than the maximum value of the buffer size defined in the second table. The minimum value of the buffer size may be a value corresponding to index "0" in the second table. The maximum value of the buffer size may be a value corresponding to index "255" in the second table.

On the other hand, even when the first configuration information indicates that use of the second table is allowed for at least one LCG having data available for transmission, in a case where the total amount of data available for transmission that all the LCHs belonging to the LCG have is not within the range of the second table, the controller 110 may select the first BSR.

In another example, in a case where the triggered BSR is the regular BSR or the periodic BSR, the first configuration information indicates that use of the second table is allowed for at least one LCG having data available for transmission, and the total amount of data available for transmission that all the LCHs belonging to the LCG have is not within the range of the second table, the controller 110 may select the BSR format as follows. The controller 110 may select the BSR format according to the above condition (b1). The controller 110 may select the BSR format according to the above conditions (c1) to (c2).

In another example, in a case where the triggered BSR is the padding BSR, the first configuration information indicates that use of the second table is allowed for at least one LCG having data available for transmission, and the total amount of data available for transmission that all the LCHs belonging to the LCG have is not within the range of the second table, the controller 110 may select the BSR format as follows. The controller 110 may select the BSR format according to the above conditions (d1) to (d3). The controller 110 may select the BSR format according to the above conditions (e1) to (e3).

### 1.7.2 Aspect 2

In comparison with the first BSR, the second BSR further includes the BT field 1520, and thus the size of the second BSR is larger than the first BSR. In a case where the triggered BSR is the padding BSR, the terminal apparatus 10 may not be able to transmit the second BSR depending on the number of padding bits. In consideration of this, the controller 110 may operate according to the following aspects 2-1 to 2-3.

### (Aspect 2-1)

In a case where the triggered BSR is the padding BSR, the controller 110 does not select the second BSR. In other words, in a case where the triggered BSR is the padding BSR, the controller 110 may select the first BSR. In another example, in a case where the triggered BSR is the padding BSR, the controller 110 may select the BSR format as follows. The controller 110 may select the BSR format according to the above conditions (d1) to (d3). The controller 110 may select the BSR format according to the above conditions (e1) to (e3).

In a case where the triggered BSR is the regular BSR or the periodic BSR, the controller 110 may select the second BSR. For example, the controller 110 may select any one of the first BSR and the second BSR according to any one of the above aspects 1-1 to 1-3.

### (Aspect 2-2)

In a case where the triggered BSR is the padding BSR, the controller 110 may select any one of the first BSR and the second BSR, based on at least one of the first configuration information, the number of padding bits, and the buffer size to be reported (for example, the buffer size of the LCG having available data).

For example, in a case where the triggered BSR is the padding BSR, the controller 110 may select any one of the first BSR and the second BSR according to any one of the above aspects 1-1 to 1-3. In this case, the controller 110 may select any one of the first BSR and the second BSR in further consideration of the number of padding bits.

For example, in a case where the triggered BSR is the padding BSR, the controller 110 may operate as follows, based on a combination of the above aspect 1-1 and the condition of the number of padding bits. In a case where the first configuration information indicates that use of the second table is allowed for at least one LCG, and the number of padding bits is equal to or larger than the size of the second BSR plus its subheader (i.e., the number of padding bits is equal to or larger than the number of bits required to transmit the second BSR), the controller 110 may select the second BSR.

In a case where the first configuration information indicates that use of the second table is allowed for at least one LCG, and the number of padding bits is less than the size of the second BSR plus its subheader, the controller 110 may select the first

### BSR.

In a case where the first configuration information indicates that use of the second table is allowed for at least one LCG, and the number of padding bits is less than the size of the second BSR plus its subheader, the controller 110 may select the BSR format as follows. The controller 110 may select the BSR format according to the above conditions (d1) to (d3). The controller 110 may select the BSR format according to the above conditions (e1) to (e3).

For example, in a case where the triggered BSR is the padding BSR, the controller 110 may operate as follows, based on a combination of the above aspect 1-2 and the condition of the number of padding bits. In a case where the first configuration information indicates that use of the second table is allowed for at least one LCG having data available for transmission, and the number of padding bits is equal to or larger than the size of the second BSR plus its subheader, the controller 110 may select the second BSR.

In a case where the first configuration information indicates that use of the second table is allowed for at least one LCG having data available for transmission, and the number of padding bits is less than the size of the second BSR plus its subheader, the controller 110 may select the first BSR.

In a case where the first configuration information indicates that use of the second table is allowed for at least one LCG having data available for transmission, and the number of padding bits is less than the size of the second BSR plus its subheader, the controller 110 may select the BSR format as follows. The controller 110 may select the BSR format according to the above conditions (d1) to (d3). The controller 110 may select the BSR format according to the above conditions (e1) to (e3).

For example, in a case where the triggered BSR is the padding BSR, the controller 110 may operate as follows, based on a combination of the above aspect 1-3 and the condition of the number of padding bits. In a case where the first configuration information indicates that use of the second table is allowed for at least one LCG having data available for transmission, the total amount of data available for transmission that all the LCHs belonging to the at least one LCG have is within the range of the second table, and the number of padding bits is equal to or larger than the size of the second BSR plus its subheader, the controller 110 may select the second

### BSR.

In a case where the first configuration information indicates that use of the second table is allowed for at least one LCG having data available for transmission, the total amount of data available for transmission that all the LCHs belonging to the at least one LCG have is within the range of the second table, and the number of padding bits is less than the size of the second BSR plus its subheader, the controller 110 may select the first BSR.

In another example, in a case where the first configuration information indicates that use of the second table is allowed for at least one LCG having data available for transmission, the total amount of data available for transmission that all the LCHs belonging to the at least one LCG have is within the range of the second table, and the number of padding bits is less than the size of the second BSR plus its subheader, the controller 110 may select the BSR format as follows. The controller 110 may select the BSR format according to the above conditions (d1) to (d3). The controller 110 may select the BSR format according to the above conditions (e1) to (e3).

In a case where the first configuration information indicates that use of the second table is allowed for at least one LCG having data available for transmission, the number of padding bits is equal to or larger than the size of the second BSR plus its subheader, and the total amount of data available for transmission that all the LCHs belonging to the one LCG have is not within the range of the second table, the controller 110 may select the first BSR.

In a case where the first configuration information indicates that use of the second table is allowed for at least one LCG having data available for transmission, the number of padding bits is equal to or larger than the size of the second BSR plus its subheader, and the total amount of data available for transmission that all the LCHs belonging to the LCG have is not within the range of the second table, the controller 110 may select the BSR format as follows. The controller 110 may select the BSR format according to the above conditions (d1) to (d3). The controller 110 may select the BSR format according to the above conditions (e1) to (e3).

### (Aspect 2-3)

In a case where the triggered BSR is the padding BSR, the controller 110 may select the long Truncated BSR configured as the second BSR. In other words, in a case where the triggered BSR is the padding BSR, the controller 110 may select any one of the first BSR, the long BSR as the second BSR, and the long Truncated BSR as the second BSR, based on at least one of the first configuration information, the number of padding bits, the buffer size to be reported (for example, the buffer size of the LCG having available data), and the priority to be reported (for example, the priority of the LCH belonging to the LCG having available data). For example, the controller 110 may select the long Truncated BSR having the configuration of Fig. 15.

For example, in a case where the first configuration information indicates that use of the second table is allowed for at least one LCG, and the number of padding bits is a predetermined size, the controller 110 may select the long Truncated BSR having the configuration of Fig. 15. "The number of padding bits is a predetermined size" may mean that it is equal to or larger than the size of the long Truncated BSR as the second BSR plus its subheader (for example, 5 bytes or more), and/or it is less than the size of the long BSR as the second BSR plus its subheader, for example.

For example, in a case where the first configuration information indicates that use of the second table is allowed for at least one LCG having data available for transmission, and the number of padding bits is the predetermined size, the controller 110 may select the long Truncated BSR having the configuration of Fig. 15.

For example, in a case where the first configuration information indicates that use of the second table is allowed for at least one LCG having data available for transmission, the total amount of data available for transmission that all the LCHs belonging to the one LCG have is within the range of the second table, and the number of padding bits is the predetermined size, the controller 110 may select the long Truncated BSR having the configuration of Fig. 15.

For example, in a case where the first configuration information indicates that use of the second table is allowed for the LCG to which the highest priority LCH belongs among the LCGs having data available for transmission, and the number of padding bits is the predetermined size, the controller 110 may select the long Truncated BSR having the configuration of Fig. 15. In other words, in a case where the triggered BSR is the padding BSR, the controller 110 may select the long Truncated BSR having the configuration of Fig. 15, based on the LCG to which the highest priority LCH belongs among the LCGs having data available for transmission. The highest priority LCH may be determined regardless of whether the LCH has available data.

For example, in a case where the first configuration information indicates that use of the second table is allowed for the LCG to which the highest priority LCH belongs among the LCGs having data available for transmission, the total amount of data available for transmission that all the LCHs belonging to the LCG have is within the range of the second table, and the number of padding bits is the predetermined size, the controller 110 may select the long Truncated BSR having the configuration of Fig. 15.

More specifically, for the padding BSR, the MAC entity for which the logicalChannelGroup-IABExt IE is not configured by upper layers may select the BSR format as follows.
(f1) In a case where the first configuration information indicates that use of the second table is allowed for at least one LCG, and the total amount of data available for transmission that all the LCHs belonging to the at least one LCG have is within the range of the second table:
(f2) In a case where the number of padding bits is equal to the size of the short BSR plus its subheader or larger than the size, and is smaller than the size of the long BSR as the second BSR (i.e., the long BSR having the configuration of Fig. 15) plus its subheader:
   (f3) In a case where two or more LCGs have data available for transmission when the BSR is built:
      (f4) In a case where the number of padding bits is equal to the size of the short BSR plus its subheader:
         The terminal apparatus 10 transmits (or reports) the short Truncated BSR of the LCG with the highest priority LCH among the LCHs having data available for transmission.
      (f4) Else:
         The terminal apparatus 10 reports the long Truncated BSR configured as the second BSR (i.e., the long Truncated BSR having the configuration of Fig. 15) for the LCG with the LCHs having data available for transmission following a decreasing order of the highest priority LCH with or without data available for transmission in each of the LCGs. Note that, in a case where the priorities are equal, the terminal apparatus 10 transmits (or reports) the long Truncated BSR configured as the second BSR in increasing order of the LCG IDs.
   (f3) else:
      The terminal apparatus 10 transmits (or reports) the short BSR,
(f2) else, in a case where the number of padding bits is equal to the size of the long BSR as the second BSR (i.e., the long BSR having the configuration of Fig. 15) plus its subheader or larger than the size:
   The terminal apparatus 10 transmits (or reports) the long BSR (i.e., the long BSR having the configuration of Fig. 15) configured as the second BSR for all LCGs which have data available for transmission.

### 1.8. Delay Information Report

It is assumed that XR is operated under various requirements including a low delay requirement. Due to this, for uplink communication from the terminal apparatus 10, the base station apparatus 20 allocates radio resources in consideration of the requirements. In order to perform such allocation of radio resources, the terminal apparatus 10 transmits a delay information report including delay information for predetermined data to the base station apparatus 20. Note that the delay information report may be referred to as a "delay status report (DSR)".

The predetermined data means a unit of data to be reported in the delay information report. In the following, the predetermined data may be referred to as "data to be reported" or a "unit of data to be reported". According to the configuration, the terminal apparatus 10 can transmit the delay information for the data to be reported to the base station apparatus 20.

The unit of data to be reported may be data corresponding to one LCH. The unit of data to be reported may be data corresponding to one LCG. The one LCG may include one or a plurality of LCHs (i.e., data corresponding to one or a plurality of LCHs). In the configuration, the unit of data to be reported may be a part or all of data available for one LCG. In other words, in the configuration, the unit of data to be reported may be a part or all of data available for all the LCHs belonging to one LCG.

The unit of data to be reported may be data corresponding to one PDU. In the configuration, the unit of data to be reported may be a part or all of data available for one PDU. The unit of data to be reported may be data corresponding to one PDU set. In the configuration, the unit of data to be reported may be a part or all of data available for one PDU set. Furthermore, the unit of data to be reported may be data corresponding to a plurality of PDU sets. For example, the unit of data to be reported may be data (or a part of data) available for one, a plurality of, or all of PDUs (or PDU sets) belonging to one PDU set.

The unit of data to be reported may be data corresponding to one data burst. In the configuration, the unit of data to be reported may be a part or all of data available for one data burst. Note that the unit of data to be reported may be data corresponding to a plurality of data bursts. For example, the unit of data to be reported may be data (or a part of data) available for one, a plurality of, or all of data (or data bursts) belonging to one data burst.

The delay information may include one or both of information explicitly indicating a delay and information implicitly indicating a delay.

### - Information Explicitly Indicating Delay

For example, the delay information may be a delay time, or an index representing a delay time. The delay information may be a remaining time until a predetermined first time limit is reached. The remaining time may be calculated based on a PDCP discard timer. The PDCP discard timer is configured for a data radio bearer (DRB). The terminal apparatus 10 may calculate the remaining time, based on the PDCP discard timer with reference to the time of initial (or first) transmission of the delay information report. For example, the terminal apparatus 10 may calculate the remaining time of a PDU of a certain PDU set, based on the PDCP discard timer associated with the PDU that arrived first in the PDU set. The delay information may include information related to a plurality of remaining times. In another example, the delay information may be information related to the shortest remaining time among a plurality of remaining times.

### - Information Implicitly Indicating Delay

For example, the delay information may include information related to data, among data to be reported, to which a time restriction or requirement is imposed. In the following, the whole of the data to be reported is referred to as "first data", and the data among the data to be reported to which a time restriction or requirement is imposed is referred to as "second data".

The second data is data to be preferentially transmitted. The second data may be referred to as urgent data. The second data may be data satisfying a condition related to a delay. For example, the second data may be data associated with the remaining time. For example, a predetermined first threshold Th1 may be applied to the remaining time of the PDCP discard timer. The second data may be data having the remaining time below the first threshold Th1.

The delay information may be information related to the size of the second data. The delay information may be an index indicating the number of bytes of the second data. For example, the delay information may be a value of an index configured with reference to the first table. The delay information may be a value of an index configured with reference to the second table.

The terminal apparatus 10 may receive a parameter related to the delay information report from the base station apparatus 20. The base station apparatus 20 may transmit an RRC message including the parameter related to the delay information report to the terminal apparatus 10. The parameter related to the delay information report may be included in the MAC-CellGroupConfig IE being an example of an RRC information element (IE). The parameter related to the delay information report may be included in an IE (for example, an LCG-DSR-Config IE) related to the delay information report included in the MAC-CellGroupConfig IE. The parameter related to the delay information report may include first indication information.

The first indication information may be "information explicitly or implicitly indicating whether or not to trigger (or transmit) the delay information report". The first indication information may indicate "to trigger (or transmit) the delay information report" or "not to trigger (or transmit) the delay information report". The first indication information may be a flag indicating "to trigger (or transmit) the delay information report" or "not to trigger (or transmit) the delay information report". Note that the first indication information may be "information indicating whether or not to transmit the delay information (for example, the remaining time)". Furthermore, the first indication information may be "information indicating whether or not to transmit information related to the size of the second data".

For example, in a case where the first indication information is included in an RRC message, the terminal apparatus 10 may trigger (or transmit) the delay information report. In a case where the first indication information is not included in an RRC message, the terminal apparatus 10 need not trigger (or transmit) the delay information report.

The first indication information may be configured for the LCG. The first indication information may be information (for example, the LCG ID) for identifying the LCG. The terminal apparatus 10 may determine whether or not to include the delay information related to the LCG in the delay information report, based on the first indication information configured for the LCG. For example, in a case where the first indication information indicates transmission of the delay information report for a certain LCG, the terminal apparatus 10 may include the delay information related to the LCG in the delay information report. The first indication information may be configured for the LCH. The first indication information may be information for identifying the LCH. For example, the first indication information may be configured as a new element of the LogicalChannelConfig IE. The terminal apparatus 10 may determine whether or not to include the delay information related to the LCH in the delay information report, based on the first indication information configured for the LCH. For example, in a case where the first indication information indicates transmission of the delay information for a certain LCH, the terminal apparatus 10 may include the delay information related to the LCH in the delay information report. The first indication information may be configured for the PDU or the PDU set. The first indication information may be information for identifying the PDU or the PDU set. The terminal apparatus 10 may determine whether or not to include the delay information related to the PDU or the PDU set in the delay information report, based on the first indication information configured for the PDU or the PDU set. For example, in a case where the first indication information indicates transmission of the delay information for a certain PDU or PDU set, the terminal apparatus 10 may include the delay information related to the PDU or the PDU set in the delay information report. The first indication information may be configured in an IE related to the PDU or the PDU set included in an RRC message. The first indication information may be configured for the data burst. The first indication information may be information for identifying the data burst. The terminal apparatus 10 may determine whether or not to include the delay information related to the data burst in the delay information report, based on the first indication information configured for the data burst. For example, in a case where the first indication information indicates transmission of the delay information for a certain data burst, the terminal apparatus 10 may include the delay information related to the data burst in the delay information report. The first indication information may be configured in an IE related to the data burst included in an RRC message.

Note that the base station apparatus 20 may transmit system information (SI, for example, SIB1 and/or SIB other than SIB1) including the first indication information to the terminal apparatus 10. The base station apparatus 20 may transmit DCI including the first indication information to the terminal apparatus 10.

The base station apparatus 20 may transmit information indicating the first threshold Th1 to the terminal apparatus 10 as the parameter related to the delay information report. The base station apparatus 20 may transmit an RRC message including the information indicating the first threshold Th1 to the terminal apparatus 10. For example, the first threshold Th1 may be included in the MAC-CellGroupConfig IE being an example of an RRC information element (IE). The first threshold Th1 may be included in an IE (for example, an LCG-DSR-Config IE) related to the delay information report included in the MAC-CellGroupConfig IE.

The first threshold Th1 may be configured for the LCG. For example, the first threshold Th1 may be configured in association with the first indication information (for example, the LCG ID) in the IE related to the delay information report. Alternatively, the first threshold Th1 may be configured as a new element of the logicalChannelGroup IE. The first threshold Th1 may be configured for the LCH. For example, the first threshold Th1 may be configured as a new element of the LogicalChannelConfig IE. The first threshold Th1 may be configured for the PDU or the PDU set. The first threshold Th1 may be configured in an IE related to the PDU or the PDU set included in an RRC message. The first threshold Th1 may be configured for the data burst. The first threshold Th1 may be configured in an IE related to the data burst included in an RRC message. The first threshold Th1 may be configured for the terminal apparatus 10.

Note that the base station apparatus 20 may transmit system information (SI, for example, SIB1 and/or SIB other than SIB1) including the information indicating the first threshold Th1 to the terminal apparatus 10. The base station apparatus 20 may transmit DCI including the information indicating the first threshold Th1 to the terminal apparatus 10.

The first threshold Th1 may be used as a threshold for triggering the delay information report. In other words, the terminal apparatus 10 may trigger (and/or transmit) the delay information report, based on the first threshold Th1. In a case where the remaining time falls below the first threshold Th1, the terminal apparatus 10 may trigger (and/or transmit) the delay information report.

For example, in a case where the remaining time related to a certain PDU or PDU set falls below the first threshold Th1 configured for the LCG, the terminal apparatus 10 may trigger (and/or transmit) the delay information report.

For example, in a case where the smallest value among a plurality of PDCP discard timers among all the PDUs in the LCG falls below the first threshold Th1, the terminal apparatus 10 may trigger (and/or transmit) the delay information report.

The base station apparatus 20 may configure a plurality of first thresholds Th1 for each LCG. In the configuration, the plurality of first thresholds Th1 may be values different from each other. Similarly, the base station apparatus 20 may configure a plurality of first thresholds Th1 for each PDU, PDU set, or data burst.

The base station apparatus 20 may indicate whether or not to trigger (or transmit) the delay information report to the terminal apparatus 10 by using the first threshold Th1. For example, in a case where the information indicating the first threshold Th1 is included in an RRC message, the terminal apparatus 10 may control to trigger (and/or transmit) the delay information report. In a case where the information indicating the first threshold Th1 is not included in an RRC message, the terminal apparatus 10 may control not to trigger (and/or transmit) the delay information report.

The terminal apparatus 10 may receive second indication information from the base station apparatus 20 as the parameter related to the delay information report. The base station apparatus 20 may transmit an RRC message including the second indication information to the terminal apparatus 10.

The second indication information may indicate a type of data to be reported. For example, the second indication information may be information indicating any one of the LCH, the LCG, the PDU, the PDU set, and the data burst. In the configuration, the terminal apparatus 10 may select the type of data to be reported, based on the second indication information. The terminal apparatus 10 may transmit the delay information report for the selected data.

The second indication information may be information implicitly indicated according to the IE in which the first indication information is configured. For example, in a case where the first indication information is configured for a MAC cell group, this may indicate that the unit of data to be reported is data corresponding to one LCG. For example, the first indication information may be configured in an IE related to the MAC cell group included in an RRC message. As another example, in a case where the first indication information is configured for the LCG, this may indicate that the unit of data to be reported is data corresponding to one LCG. For example, the first indication information may be configured in an IE related to the LCG. One example of such an IE is the logicalChannelGroup IE. In a case where the first indication information is configured for the LCH, this may indicate that the unit of data to be reported is data corresponding to one LCH. The first indication information may be configured in an IE related to the LCH. One example of such an IE is the LogicalChannelConfig IE.

In a case where the first indication information is configured for the PDU or the PDU set, this may indicate that the unit of data to be reported is data corresponding to PDUs or one or more PDU sets. For example, the first indication information may be configured in an IE related to the PDU or the PDU set included in an RRC message.

In a case where the first indication information is configured for the data burst, this may indicate that the unit of data to be reported is data corresponding to one or more data bursts. For example, the first indication information may be configured in an IE related to the data burst included in an RRC message.

Note that the base station apparatus 20 may transmit system information (SI, for example, SIB1 and/or SIB other than SIB1) including the second indication information to the terminal apparatus 10. The base station apparatus 20 may transmit DCI including the second indication information to the terminal apparatus 10.

The terminal apparatus 10 may transmit a MAC CE including delay information as the delay information report. Thus, the delay information report may be referred to as a "DSR MAC CE".

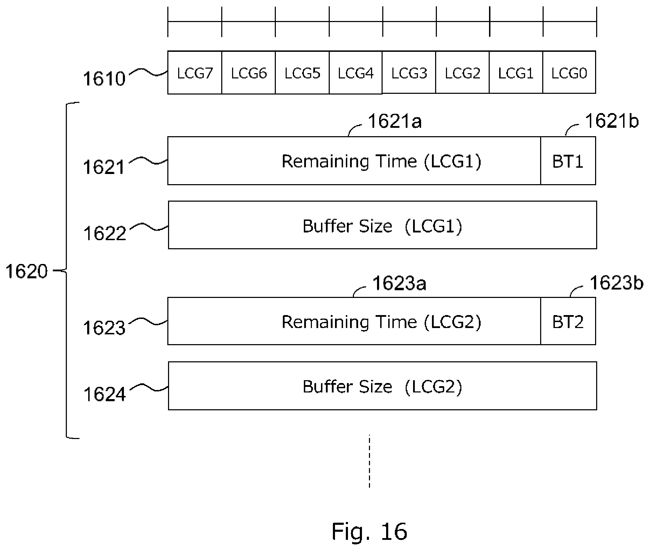

For example, the terminal apparatus 10 may transmit the DSR MAC CE illustrated in Fig. 16. As illustrated in Fig. 16, the DSR MAC CE includes an LCG field 1610 and a delay information field 1620.

The LCG field 1610 includes 8 bits. In the LCG field 1610, the 8 bits respectively correspond to 8 "LCGi"s. The LCG field 1610 may indicate whether delay information for LCGi (i.e., a remaining time field and a buffer size field to be described later) is present in the delay information field 1620. For example, in the LCG field 1610, in a case where the value of LCGi is 1, this indicates that the remaining time field and the buffer size field for LCGi are present in the delay information field 1620. In a case where the value of LCGi is 0, this indicates that the remaining time field and the buffer size field for LCGi are not present in the delay information field 1620.

The number of fields included in the delay information field 1620 is variable according to the value of the LCG field 1610. In the LCG field 1610, it is assumed that the bit corresponding to LCG1 is 1 and the bit corresponding to LCG2 is 1. Thus, the delay information field 1620 includes delay information corresponding to LCG1 (i.e., a remaining time field 1621 and a buffer size field 1622). Furthermore, the delay information field 1620 includes delay information corresponding to LCG2 (i.e., a remaining time field 1623 and a buffer size field 1624). Note that, in the LCG field 1610, it is assumed that the bit corresponding to LCG0 is 0. Thus, delay information corresponding to LCG0 is not included in the delay information field 1620.

The remaining time field 1621 includes a first part 1621a and a second part 1621b. The first part 1621a includes 7 bits. The first part 1621a represents the remaining time related to data corresponding to LCG1. The first part 1621a may be an index representing the remaining time. The first part 1621a may be the smallest value among a plurality of PDCP discard timers among all the PDUs in LCG1. The first part 1621a may be the smallest value among a plurality of PDCP discard timers among all the PDCP SDUs buffered in LCG1.

The second part 1621b includes 1 bit, and represents a buffer size table (BT). The second part 1621b indicates which of the first table (for example, the BSR table 1100) and the second table is used to indicate the buffer size of LCG1. In other words, the second part 1621b indicates in which of the first table and the second table the buffer size field 1622 is configured. In a case where the value of the second part 1621b is 0, this may indicate that the first table is used for configuration of the buffer size field 1622. In a case where the value of the second part 1621b is 1, this may indicate that the second table is used for configuration of the buffer size field 1622. The second part 1621b need not be included in the delay information report. In this case, which of the first table and the second table is used to indicate the buffer size of LCG1 may be defined in a specification in advance. For example, it may be considered that the first table is used to indicate the buffer size of LCG1. It may be considered that the second table is used to indicate the buffer size of LCG1.

The buffer size field 1622 includes 8 bits. The buffer size field 1622 may indicate the buffer size of the second data corresponding to LCG1. For example, the buffer size field 1622 may be the size of data having the remaining time below the first threshold Th1. The buffer size field 1622 may represent the total amount of the sizes of all the PDUs included in the same PDU set as the PDU (i.e., the PDCP SDU) having the remaining time below the first threshold Th1 and having triggered the delay information report (i.e., the DSR) for a corresponding LCG. The buffer size field 1622 may represent the total amount of the sizes of all the PDUs included in the same PDU set as the PDU having the remaining time below the first threshold Th1. For example, the buffer size field 1622 may be the size of data having the remaining time indicated in the first part 1621a (or having a time below the remaining time indicated in the first part 1621a). The buffer size field 1622 may represent the total amount of the sizes of all the PDUs included in the same PDU set as the PDU (i.e., the PDCP SDU) having the remaining time indicated in the first part 1621a and having triggered the delay information report (i.e., the DSR) for a corresponding LCG. The buffer size field 1622 may represent the total amount of the sizes of all the PDUs included in the same PDU set as the PDU having the remaining time indicated in the first part 1621a.

The remaining time field 1623 has the same configuration as that of the remaining time field 1621. The remaining time field 1623 includes a first part 1623a and a second part 1623b. The first part 1623a represents the remaining time related to data corresponding to LCG2. The second part 1623b indicates in which of the first table and the second table the buffer size field 1624 is configured.

The buffer size field 1624 has the same configuration as that of the buffer size field 1622. The buffer size field 1624 may indicate the buffer size of the second data corresponding to LCG2.

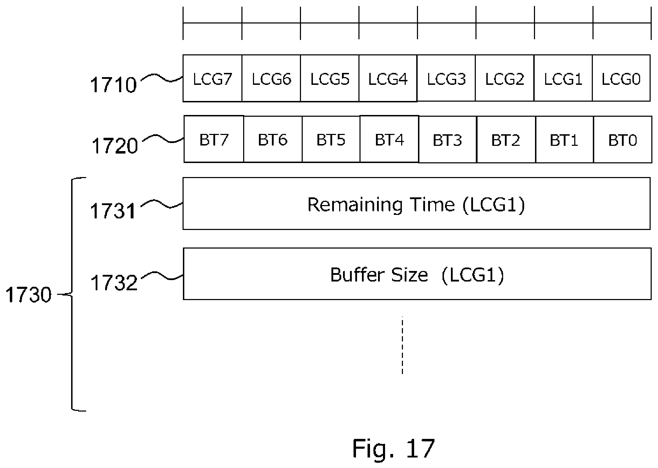

The terminal apparatus 10 may transmit the DSR MAC CE illustrated in Fig. 17. As illustrated in Fig. 17, the DSR MAC CE includes an LCG field 1710, a buffer size table (BT) field 1720, and a delay information field 1730.

The LCG field 1710 has the same configuration as that of the LCG field 1610. The LCG field 1710 includes 8 bits. The 8 bits respectively correspond to 8 "LCGi"s. The LCG field 1710 may indicate whether delay information for LCGi (i.e., a remaining time field and a buffer size field to be described later) is present in the delay information field 1730. For example, in the LCG field 1710, in a case where the value of LCGi is 1, this indicates that the remaining time field and the buffer size field for LCGi are present in the delay information field 1730. In a case where the value of LCGi is 0, this indicates that the remaining time field and the buffer size field for LCGi are not present in the delay information field 1730.

The BT field 1720 includes 8 bits. The 8 bits respectively correspond to 8 "LCGi"s. For example, the BT field 1720 indicates which of the first table and the second table is used for the buffer size field for LCGi. In a case where the value of BTi is 0, this may indicate that the first table is used to indicate the buffer size of LCGi. In a case where the value of BTi is 1, this may indicate that the second table is used to indicate the buffer size of LCGi. The BT field 1720 need not be included in the delay information report. In this case, which of the first table and the second table is used to indicate the buffer size of LCGi may be defined in a specification in advance. For example, it may be considered that the first table is used to indicate the buffer size of LCGi. It may be considered that the second table is used to indicate the buffer size of LCGi.

The number of fields included in the delay information field 1730 is variable according to the value of the LCG field 1710. In the LCG field 1710, it is assumed that the bit corresponding to LCG1 is 1. Thus, the delay information field 1730 includes delay information corresponding to LCG1 (i.e., a remaining time field 1731 and a buffer size field 1732). Note that, in the LCG field 1710, it is assumed that the bit corresponding to LCG0 is 0. Thus, delay information corresponding to LCG0 is not included in the delay information field 1730.

The remaining time field 1731 includes 8 bits. The remaining time field 1731 has the same configuration as that of the first part 1621a of the remaining time field 1621. The remaining time field 1731 represents the remaining time related to data corresponding to LCG1.

The buffer size field 1732 includes 8 bits. The buffer size field 1732 has the same configuration as that of the buffer size field 1622. The buffer size field 1732 may indicate the buffer size of the second data corresponding to LCG1.

Note that, in the examples of Fig. 16 and Fig. 17, the DSR MAC CE includes information of both the remaining time and the buffer size as the delay information; however, this configuration is not restrictive. The DSR MAC CE may be configured to include one of the remaining time and the buffer size.

The MAC PDU may include identification information for identifying whether it is the delay information report. For example, the MAC subheader includes a value (i.e., a codepoint) of LCID or eLCID. The value of LCID or eLCID indicating that it is the delay information report may be defined.

Based on the type of data to be reported, the following values of LCID or eLCID may be defined.
- The MAC CE includes the delay information report, and the unit of data to be reported is data corresponding to one LCH.
- The MAC CE includes the delay information report, and the unit of data to be reported is data corresponding to one LCG.
- The MAC CE includes the delay information report, and the unit of data to be reported is data corresponding to one PDU.
- The MAC CE includes the delay information report, and the unit of data to be reported is data corresponding to one or more PDU sets.
- The MAC CE includes the delay information report, and the unit of data to be reported is data corresponding to one or more data bursts.

The following will describe a procedure in which the terminal apparatus 10 transmits the delay information report (for example, the DSR MAC CE) to the base station apparatus 20.

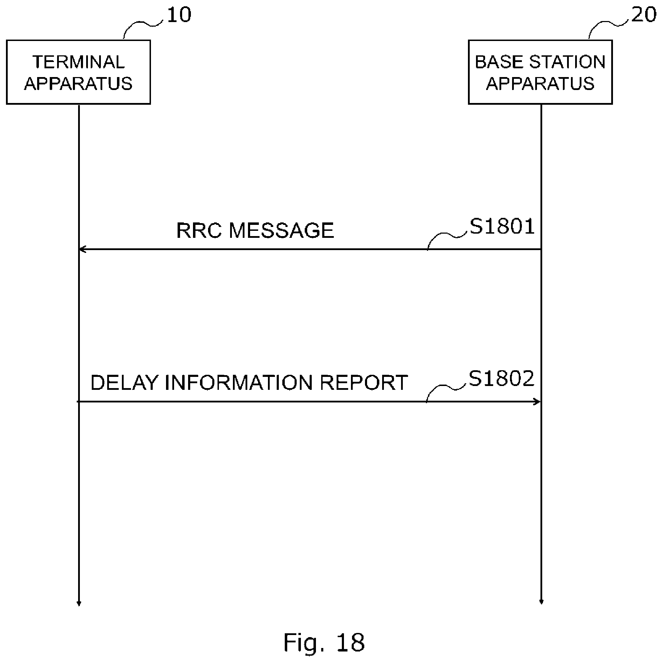

As illustrated in Fig. 18, the communicator 220 of the base station apparatus 20 transmits an RRC message to the terminal apparatus 10 (S1801). The RRC message includes the parameter related to the delay information report. The parameter related to the delay information report may include at least one of the first threshold Th1, the first indication information, and the second indication information. The RRC message may be an RRC reconfiguration (RRCReconfiguration) message.

The controller 110 of the terminal apparatus 10 triggers the delay information report, based on the parameter included in the RRC message. For example, in a case where the remaining time falls below the first threshold Th1, the controller 110 may trigger the delay information report. The communicator 120 of the terminal apparatus 10 transmits the delay information report (S1802).

The controller 210 of the base station apparatus 20 performs allocation of radio resources to the terminal apparatus 10, based on the delay information report. The controller 210 may determine a degree of delay, based on the delay information included in the delay information report. For example, the controller 210 may determine a degree of delay, based on the remaining time and/or the size of the second data. The controller 210 may allocate radio resources for uplink communication from the terminal apparatus 10, based on the delay information.

As described above, for example, the terminal apparatus 10 triggers the BSR according to conditions (a1) to (a4). The terminal apparatus 10 may trigger the delay information report, based on the first threshold Th1. Because the condition for triggering the BSR and the condition for triggering the delay information report are different, the BSR and the delay information report may be triggered substantially at the same timing. In a case where only data having a small remaining time is included in a buffer of the terminal apparatus 10, information of all the buffer sizes is included in the delay information report. Thus, necessity of transmitting the BSR is low.

In consideration of the above, in a case where the BSR and the delay information report are triggered, and the terminal apparatus 10 transmits the delay information report, the terminal apparatus 10 may cancel the triggered BSR, based on transmission of the delay information report.

For example, in a case where the MAC PDU is transmitted, the PDU includes the delay information report (for example, the DSR MAC CE), and the delay information report includes the buffer status up to the last event that triggered the BSR before MAC PDU assembly, all the BSRs triggered before the MAC PDU assembly may be cancelled. For example, in a case where buffer status information included in the triggered BSR can all be included in the delay information report, the terminal apparatus 10 may cancel the triggered BSR.

In a case where the BSR and the delay information report are triggered, and the terminal apparatus 10 transmits the BSR, the terminal apparatus 10 need not cancel the triggered delay information report. In other words, after transmitting the BSR, the terminal apparatus 10 may also transmit the delay information report. The BSR does not include information related to the remaining time, and thus there is an advantage in transmitting the delay information report.

### 2. Alterations

Although the present disclosure is described according to the embodiments, it is understood that the present disclosure is not limited to the embodiments or the structures. The present disclosure includes various alterations and variations within the equivalent scope. Any other combination including one or more elements included in the embodiments is included in the gist or spirit scope of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted/received in the embodiments may be transmitted/received in the same or a different message or the same or a different element as or from that already described in the technical specifications, or may be transmitted/received in a new message or element to be defined. The information transmitted/received in the embodiments may be transmitted/received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, when one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

### 3. Supplementary Notes

The whole or part of the embodiments and the alterations may be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

### (Supplementary Note A1)

A terminal apparatus comprising:
a controller (110) configured to generate, as buffer status reporting (BSR), a first BSR including a first buffer size field configured with reference to a first table and a second BSR including the first buffer size field and a second buffer size field configured with reference to a second table different from the first table; and
a communicator (120) configured to transmit the BSR to a base station apparatus (20), wherein
the controller is configured to select any one of the first BSR and the second BSR according to which of a regular BSR, a padding BSR, and a periodic BSR a triggered BSR is.

### (Supplementary Note A2)

The terminal apparatus according to supplementary note A1, wherein
the controller is configured to select the first BSR in a case where the triggered BSR is the padding BSR.

### (Supplementary Note A3)

The terminal apparatus according to supplementary note A2, wherein
the communicator is configured to receive configuration information indicating whether or not use of the second table by the terminal apparatus is allowed from the base station apparatus, and
the controller is configured to select the second BSR in a case where the triggered BSR is the regular BSR or the periodic BSR, and the configuration information indicates that use of the second table by the terminal apparatus is allowed.

### (Supplementary Note A4)

The terminal apparatus according to supplementary note A1, wherein
the communicator is configured to receive configuration information indicating whether or not use of the second table by the terminal apparatus is allowed from the base station apparatus, and
the controller is configured to, in a case where the triggered BSR is the padding BSR, select any one of the first BSR and the second BSR, based on at least one of the configuration information, number of padding bits, and a buffer size to be reported.

### (Supplementary Note A5)

The terminal apparatus according to supplementary note A4, wherein
the controller is configured to select the second BSR in a case where the configuration information indicates that use of the second table by the terminal apparatus is allowed, and the number of padding bits is equal to or larger than number of bits required to transmit the second BSR.

### (Supplementary Note A6)

The terminal apparatus according to supplementary note A4, wherein
the controller is configured to select the first BSR in a case where the configuration information indicates that use of the second table by the terminal apparatus is allowed, and the number of padding bits is less than number of bits required to transmit the second BSR.

### (Supplementary Note A7)

The terminal apparatus according to supplementary note A4, wherein
the controller is configured to select the second BSR in a case where the configuration information indicates that use of the second table by the terminal apparatus is allowed, the number of padding bits is equal to or larger than number of bits required to transmit the second BSR, and the buffer size to be reported is within a range of the second table.

### (Supplementary Note A8)

The terminal apparatus according to supplementary note A4, wherein
the controller is configured to select the first BSR in a case where the configuration information indicates that use of the second table by the terminal apparatus is allowed, the number of padding bits is equal to or larger than number of bits required to transmit the second BSR, and the buffer size to be reported is not within a range of the second table.

### (Supplementary Note A9)

The terminal apparatus according to supplementary note A5 or A7, wherein
the second BSR is a long Truncated BSR.

### (Supplementary Note A10)

The terminal apparatus according to supplementary note A9, wherein
the controller is configured to include one or more of the second buffer size fields in the second BSR according to a priority of a logical channel (LCH).

### (Supplementary Note A11)

The terminal apparatus according to supplementary note A1, wherein
the controller is configured to generate a delay information report including delay information, and
the controller is configured to cancel the triggered BSR in a case where the BSR and the delay information report are triggered, and the communicator transmits the delay information report.

### (Supplementary Note A12)

The terminal apparatus according to supplementary note A1, wherein
the controller is configured to generate a delay information report including delay information, and
the controller is configured to further transmit the delay information report in a case where the BSR and the delay information report are triggered, and the communicator transmits the BSR.

### (Supplementary Note A13)

A method for a terminal apparatus, the method comprising:
generating, as buffer status reporting (BSR), a first BSR including a first buffer size field configured with reference to a first table and a second BSR including the first buffer size field and a second buffer size field configured with reference to a second table different from the first table; and
transmitting the BSR to a base station apparatus (20), wherein
the generating includes selecting any one of the first BSR and the second BSR according to which of a regular BSR, a padding BSR, and a periodic BSR a triggered BSR is.

### (Supplementary Note A14)

A program causing a processor (101) in a terminal apparatus (10) to execute:
generating, as buffer status reporting (BSR), a first BSR including a first buffer size field configured with reference to a first table and a second BSR including the first buffer size field and a second buffer size field configured with reference to a second table different from the first table; and
transmitting the BSR to a base station apparatus (20), wherein
the generating includes selecting any one of the first BSR and the second BSR according to which of a regular BSR, a padding BSR, and a periodic BSR a triggered BSR is.

### (Supplementary Note A15)

A non-transitory tangible recording medium recording thereon a program causing a processor (101) in a terminal apparatus (10) to execute:
generating, as buffer status reporting (BSR), a first BSR including a first buffer size field configured with reference to a first table and a second BSR including the first buffer size field and a second buffer size field configured with reference to a second table different from the first table; and
transmitting the BSR to a base station apparatus (20), wherein
the generating includes selecting any one of the first BSR and the second BSR according to which of a regular BSR, a padding BSR, and a periodic BSR a triggered BSR is.

### (Supplementary Note B1)

A terminal apparatus comprising:
a transmitter (121) configured to transmit, to a base station apparatus (20), a first buffer status reporting (BSR) medium access control control element (MAC CE) having a first format including a buffer size field indicating an amount of available data based on a first table related to a buffer size; and
a receiver (122) configured to receive, from the base station apparatus, a radio resource control (RRC) message including information for configuring an identifier (ID) of a logical channel group (LCG) to which a logical channel (LCH) belongs and information for allowing use of a second table related to the buffer size for the LCG, wherein
the transmitter is configured to, in a case where the information for allowing use of the second table is configured, the amount of the available data is within a buffer size defined in the second table, and number of padding bits is equal to or larger than a predetermined size, transmit, to the base station apparatus, a second BSR MAC CE having a second format including the buffer size field indicating the amount of the available data based on any one of the first table and the second table.

### (Supplementary Note B2)

The terminal apparatus according to supplementary note B1, wherein
the transmitter is configured to transmit any one of the first BSR MAC CE and the second BSR MAC CE to the base station apparatus as a padding BSR.

### (Supplementary Note B3)

The terminal apparatus according to supplementary note B1 or B2, wherein
the second BSR MAC CE includes a field indicating which of the first table and the second table is used.

### (Supplementary Note B4)

The terminal apparatus according to any one of supplementary notes B1 to B3, wherein
the predetermined size is a size of the second BSR MAC CE plus its subheader.

### (Supplementary Note B5)

The terminal apparatus according to any one of supplementary notes B1 to B4, further comprising
a controller (110) configured to trigger a BSR and a delay status report (DSR), wherein
the transmitter is configured to transmit a DSR MAC CE to the base station apparatus, and
the controller is configured to cancel the triggered BSR, based on information related to a buffer size included in the DSR MAC CE.

### (Supplementary Note B6)

A method for a terminal apparatus, the method comprising:
transmitting, to a base station apparatus (20), a first buffer status reporting (BSR) medium access control control element (MAC CE) having a first format including a buffer size field indicating an amount of available data based on a first table related to a buffer size; and
receiving, from the base station apparatus, a radio resource control (RRC) message including information for configuring an identifier (ID) of a logical channel group (LCG) to which a logical channel (LCH) belongs and information for allowing use of a second table related to the buffer size for the LCG, wherein
the method further includes, in a case where the information for allowing use of the second table is configured, the amount of the available data is within a buffer size defined in the second table, and a number of padding bits is equal to or larger than a predetermined size, transmitting, to the base station apparatus, a second BSR MAC CE having a second format including the buffer size field indicating the amount of the available data based on any one of the first table and the second table.

### (Supplementary Note B7)

The method according to supplementary note B6, further comprising
transmitting any one of the first BSR MAC CE and the second BSR MAC CE to the base station apparatus as a padding BSR.

### (Supplementary Note B8)

The method according to supplementary note B6 or B7, wherein
the second BSR MAC CE includes a field indicating which of the first table and the second table is used.

### (Supplementary Note B9)

The method according to any one of supplementary notes B6 to B8, wherein
the predetermined size is a size of the second BSR MAC CE plus its subheader.

### (Supplementary Note B10)

The method according to any one of supplementary notes B6 to B9, further comprising:
triggering a BSR and a delay status report (DSR);
transmitting a DSR MAC CE to the base station apparatus; and
canceling the triggered BSR, based on information related to a buffer size included in the DSR MAC CE.

### (Supplementary Note B11)

A base station apparatus comprising:
a receiver (222) configured to receive, from a terminal apparatus (10), a first buffer status reporting (BSR) medium access control control element (MAC CE) having a first format including a buffer size field indicating an amount of available data based on a first table related to a buffer size; and
a transmitter (221) configured to transmit, to the terminal apparatus, a radio resource control (RRC) message including information for configuring an identifier (ID) of a logical channel group (LCG) to which a logical channel (LCH) belongs and information for allowing use of a second table related to the buffer size for the LCG, wherein
the receiver is configured to, in a case where the information for allowing use of the second table is configured, the amount of the available data is within a buffer size defined in the second table, and a number of padding bits is equal to or larger than a predetermined size, receive, from the terminal apparatus, a second BSR MAC CE having a second format including the buffer size field indicating the amount of the available data based on any one of the first table and the second table.

### (Supplementary Note B12)

The base station apparatus according to supplementary note B11, wherein
the receiver is configured to receive any one of the first BSR MAC CE and the second BSR MAC CE from the terminal apparatus as a padding BSR.

### (Supplementary Note B13)

The base station apparatus according to supplementary note B11 or B12, wherein
the second BSR MAC CE includes a field indicating which of the first table and the second table is used.

### (Supplementary Note B14)

The base station apparatus according to any one of supplementary notes B11 to B13, wherein
the predetermined size is a size of the second BSR MAC CE plus its subheader.

The disclosure contents of the above-mentioned related art documents and reference literature are incorporated herein by reference.

## Claims

1. A terminal apparatus comprising:
a transmitter (121) configured to transmit, to a base station apparatus (20), a first buffer status reporting (BSR) medium access control control element (MAC CE) having a first format including a buffer size field indicating an amount of available data based on a first table related to a buffer size; and
a receiver (122) configured to receive, from the base station apparatus, a radio resource control (RRC) message including information for configuring an identifier (ID) of a logical channel group (LCG) to which a logical channel (LCH) belongs and information for allowing use of a second table related to the buffer size for the LCG, wherein
the transmitter is configured to, in a case where the information for allowing use of the second table is configured, the amount of the available data is within a buffer size defined in the second table, and a number of padding bits is equal to or larger than a predetermined size, transmit, to the base station apparatus, a second BSR MAC CE having a second format including the buffer size field indicating the amount of the available data based on any one of the first table and the second table.

2. The terminal apparatus according to claim 1, wherein
the transmitter is configured to transmit any one of the first BSR MAC CE and the second BSR MAC CE to the base station apparatus as a padding BSR.

3. The terminal apparatus according to claim 1 or 2, wherein
the second BSR MAC CE includes a field indicating which of the first table and the second table is used.

4. The terminal apparatus according to any one of claims 1 to 3, wherein
the predetermined size is a size of the second BSR MAC CE plus its subheader.

5. The terminal apparatus according to any one of claims 1 to 4, further comprising
a controller (110) configured to trigger a BSR and a delay status report (DSR), wherein
the transmitter is configured to transmit a DSR MAC CE to the base station apparatus, and
the controller is configured to cancel the triggered BSR, based on information related to a buffer size included in the DSR MAC CE.

6. A method for a terminal apparatus, the method comprising:
transmitting, to a base station apparatus (20), a first buffer status reporting (BSR) medium access control control element (MAC CE) having a first format including a buffer size field indicating an amount of available data based on a first table related to a buffer size; and
receiving, from the base station apparatus, a radio resource control (RRC) message including information for configuring an identifier (ID) of a logical channel group (LCG) to which a logical channel (LCH) belongs and information for allowing use of a second table related to the buffer size for the LCG, wherein
the method further includes, in a case where the information for allowing use of the second table is configured, the amount of the available data is within a buffer size defined in the second table, and a number of padding bits is equal to or larger than a predetermined size, transmitting, to the base station apparatus, a second BSR MAC CE having a second format including the buffer size field indicating the amount of the available data based on any one of the first table and the second table.

7. The method according to claim 6, further comprising
transmitting any one of the first BSR MAC CE and the second BSR MAC CE to the base station apparatus as a padding BSR.

8. The method according to claim 6 or 7, wherein
the second BSR MAC CE includes a field indicating which of the first table and the second table is used.

9. The method according to any one of claims 6 to 8, wherein
the predetermined size is a size of the second BSR MAC CE plus its subheader.

10. The method according to any one of claims 6 to 9, further comprising:
triggering a BSR and a delay status report (DSR);
transmitting a DSR MAC CE to the base station apparatus; and
canceling the triggered BSR, based on information related to a buffer size included in the DSR MAC CE.

11. A base station apparatus comprising:
a receiver (222) configured to receive, from a terminal apparatus (10), a first buffer status reporting (BSR) medium access control control element (MAC CE) having a first format including a buffer size field indicating an amount of available data based on a first table related to a buffer size; and
a transmitter (221) configured to transmit, to the terminal apparatus, a radio resource control (RRC) message including information for configuring an identifier (ID) of a logical channel group (LCG) to which a logical channel (LCH) belongs and information for allowing use of a second table related to the buffer size for the LCG, wherein
the receiver is configured to, in a case where the information for allowing use of the second table is configured, the amount of the available data is within a buffer size defined in the second table, and a number of padding bits is equal to or larger than a predetermined size, receive, from the terminal apparatus, a second BSR MAC CE having a second format including the buffer size field indicating the amount of the available data based on any one of the first table and the second table.

12. The base station apparatus according to claim 11, wherein
the receiver is configured to receive any one of the first BSR MAC CE and the second BSR MAC CE from the terminal apparatus as a padding BSR.

13. The base station apparatus according to claim 11 or 12, wherein
the second BSR MAC CE includes a field indicating which of the first table and the second table is used.

14. The base station apparatus according to any one of claims 11 to 13, wherein the predetermined size is a size of the second BSR MAC CE plus its subheader.
